# EUROPEAN PATENT APPLICATION

(11) **EP 4 513 325 A1**
(43) Date of publication of application: **26.02.2025**
(21) Application number: 23815002.3
(22) Date of filing: 22.05.2023
(51) Int. Cl.: G06F 8/20

(54) **APPLICATION INTERFACE DISPLAY METHOD AND ELECTRONIC DEVICE**

(30) Priority: 28.05.2022 CN 202210595303
(71) Applicant: Huawei Technologies Co., Ltd., Shenzhen, Guangdong 518129 (CN)
(72) Inventor: BIAN, Chao, Shenzhen, Guangdong 518129 (CN)
(74) Representative: MERH-IP Matias Erny Reichl Hoffmann Patentanwälte PartG mbB
(86) International application number: PCT/CN2023/095508
(87) International publication number: WO 2023/231818

(57) **Abstract**

The present invention discloses an application interface display method and an electronic device. The method includes: An electronic device displays an application interface of a target application, where an interface layout of the application interface corresponds to a screen size of the electronic device or a size of the application interface, the interface layout of the application interface is determined based on a layout parameter of the application interface on the electronic device, the layout parameter is determined based on an interface attribute of the application interface of the target application and the screen size of the electronic device or the size of the application interface, and the interface attribute is a preset condition that constrains the layout parameter. In this way, the interface layout corresponding to the screen size of the electronic device or the size of the application interface may be displayed based on the layout parameter of the application interface. Therefore, the application interface can adapt to the screen size of the electronic device, to achieve better display effect.

## Description

### CROSS-REFERENCE TO RELATED APPLICATIONS

This application claims priority to Chinese Patent Application No. 202210595303.7, filed with the China National Intellectual Property Administration on May 28, 2022 and entitled "APPLICATION INTERFACE DISPLAY METHOD AND ELECTRONIC DEVICE", which is incorporated herein by reference in its entirety.

### TECHNICAL FIELD

This application relates to the field of terminal technologies, and in particular, to an application interface display method and an electronic device.

### BACKGROUND

Currently, forms of intelligent terminals are increasingly diversified, and electronic devices owned by a user gradually expand from a smart phone to a device such as a smart watch, a smart television, or a smart vehicle head unit. Diversified types of electronic devices bring diversified screens. User interfaces of some applications may need to be migrated between screens of different electronic devices. For example, an application interface of a smart phone may need to be displayed on a smart television.

In a conventional technology, when an application interface is migrated between screens of different electronic devices, better display effect cannot be achieved. For example, for an application developed based on an electronic device (for example, a smart phone) with a small screen, a layout of an application interface of the application is applicable to the small screen, and better display effect can be achieved when the application interface is displayed on the small screen. However, when the application interface is migrated to an electronic device with a large screen (for example, migrated from a smart phone to a smart television), better display effect cannot be achieved when the application interface is displayed on the large screen. For example, when the application interface is displayed on the large screen, application interfaces of a plurality of small windows are displayed. An application interface of each small window corresponds to an application interface displayed on a small screen, and each application interface is usually displayed in full screen when being displayed on the small screen. Clearly, this manner cannot give full play to advantages of the large screen, and affects display effect of the application interface. Consequently, better display effect cannot be achieved when the application interface is migrated between the screens of different electronic devices. This is an urgent problem to be resolved.

### SUMMARY

This application provides an application interface display method and an electronic device, to resolve a problem that better display effect cannot be achieved when an application interface is migrated between screens of different electronic devices.

According to a first aspect, an embodiment of this application provides an application interface display method. The method may be applied to an electronic device provided in this application. The method specifically includes:

An electronic device displays an application interface of a target application, where an interface layout of the application interface corresponds to a screen size of the electronic device or a size of the application interface, the interface layout of the application interface is determined based on a layout parameter of the application interface on the electronic device, the layout parameter is determined based on an interface attribute of the application interface of the target application, and the screen size of the electronic device and/or the size of the application interface, and the interface attribute is a preset condition that constrains the layout parameter.

In the foregoing manner, when the application interface of the target application is migrated to the electronic device, the layout parameter on the electronic device can be determined based on the interface attribute of the target application, and the screen size of the electronic device and/or the size of the application interface, so that the interface layout corresponding to the screen size of the electronic device can be displayed based on the layout parameter of the application interface. Therefore, the application interface can adapt to the screen size of the electronic device, to achieve better display effect.

In a possible design, the interface attribute of the application interface includes a spacing attribute, and the spacing attribute is used to determine a spacing between adjacent interface elements in the application interface.

In this way, the spacing between the adjacent interface elements in the application interface can be adaptively determined, to improve the display effect.

In a possible design, the spacing attribute is used to determine that the spacing between the adjacent interface elements in the application interface is the same, and a spacing between an interface element at an edge of the application interface and the edge of the application interface is the same or different; and/or
the spacing attribute is used to determine a maximum value and/or a minimum value of the spacing between the adjacent interface elements in the application interface, and/or the spacing attribute is used to determine a maximum value and/or a minimum value of the spacing between the interface element at the edge of the application interface and the edge of the application interface.

On a premise of setting the maximum value and/or the minimum value of the spacing and setting whether the spacing between the adjacent interface elements in the application interface and/or the spacing between the interface element at the edge of the application interface and the edge of the application interface are the same, the spacing between the adjacent interface elements in the application interface and the spacing between the interface element at the edge of the application interface and the edge of the application interface are adaptively determined under a specific condition. This improves flexibility.

In a possible design, the spacing attribute includes a mapping relationship between the spacing between the adjacent interface elements in the application interface and a size of the adjacent interface element, and/or a mapping relationship between the spacing between the interface element at the edge of the application interface and the edge of the application interface and a size of the interface element at the edge of the application interface.

In this way, the spacing between the adjacent interface elements in the application interface can be adaptively adjusted based on the size of the adjacent interface element, and the spacing between the interface element at the edge of the application interface and the edge of the application interface can be adaptively adjusted based on the size of the interface element at the edge of the application interface.

In a possible design, the interface attribute of the application interface includes an element arrangement attribute, and the element arrangement attribute is used to determine a display area in the application interface and a display area in which each interface element is located.

In this way, the display area in the application interface and the display area in which each interface element is located can be adaptively determined.

In a possible design, the element arrangement attribute includes a row attribute and/or a column attribute, the row attribute is used to determine a quantity of rows of the interface element in the application interface and a row in which the interface element is located, and the column attribute is used to determine a quantity of columns of the interface element in the application interface and a column in which the interface element is located.

In the foregoing manner, the row attribute and the column attribute are set, so that the quantity of rows of the interface element, the row in which the interface element is located, the quantity of columns of the interface element, and the column in which the interface element is located can be adaptively determined.

In a possible design, the row attribute includes a mapping relationship between a ratio of a length to a width of the application interface and the quantity of rows of the interface element in the application interface, and the column attribute includes a mapping relationship between the ratio of the length to the width of the application interface and the quantity of columns of the interface element in the application interface.

In the foregoing manner, because the ratio of the length to the width of the application interface can indirectly reflect the screen size of the electronic device, the row attribute and/or the column attribute are/is determined based on the ratio of the length to the width of the application interface, so that an interface element arrangement in the application interface is more applicable to the screen size of the electronic device.

In a possible design, the row attribute includes at least one of a maximum quantity of rows, a minimum quantity of rows, a maximum quantity of row elements, and a minimum quantity of row elements, and the column attribute includes at least one of a maximum quantity of columns, a minimum quantity of columns, a maximum quantity of column elements, and a minimum quantity of column elements.

In a possible design, the interface attribute of the application interface includes a hidden attribute, and the hidden attribute is used to determine whether each interface element in the application interface is hidden or displayed.

In this way, each interface element in the application interface being hidden or displayed can be adaptively determined.

In a possible design, the hidden attribute includes a hidden priority corresponding to each interface element in the application interface, and the interface element in the application interface is hidden based on a hidden priority order of the interface element.

In the foregoing manner, the hidden priority of each interface element is set, so that an important interface element can be highlighted, to avoid display distortion, of a page element, caused by display of excessive interface elements due to the screen size.

In a possible design, the hidden attribute further includes a hidden element set and/or a maximum quantity of hidden elements, the hidden element set is a set of interface elements that are allowed to be hidden in the application interface, and the maximum quantity of hidden elements is a maximum quantity of interface elements that are allowed to be hidden in the application interface.

In the foregoing manner, the hidden element set and/or the maximum quantity of hidden elements are set, to further control hiding or display of the interface element in the application interface.

In a possible design, the interface attribute of the application interface includes a scaling attribute, and the scaling attribute is used to determine a size of each interface element in the application interface.

In this way, the size of each interface element in the application interface can be adaptively determined, to improve the display effect.

In a possible design, the scaling attribute is used to determine a scaling ratio of the size of each interface element in the application interface, and a scaling ratio of a size of any interface element is obtained based on a width of the interface element, and the screen size of the electronic device and/or the size of the application interface.

In a possible design, the interface attribute of the application interface includes a repetition attribute, and the repetition attribute is used to determine a quantity of repeatedly displayed interface elements in the application interface.

In this way, whether each interface element in the application interface is repeatedly displayed can be adaptively determined, to improve the display effect.

In a possible design, the quantity of repeatedly displayed interface elements in the application interface is determined based on the repetition attribute, the size of each interface element in the application interface, and the ratio of the length to the width of the application interface.

In the foregoing manner, because the ratio of the length to the width of the application interface can indirectly reflect the screen size of the electronic device, the quantity of repeatedly displayed interface elements is determined based on the ratio of the length to the width of the application interface, so that repeated display of the interface element in the application interface is more applicable to the screen size of the electronic device.

In a possible design, before that an electronic device displays an application interface of a target application, the method further includes:

The electronic device obtains the interface attribute of the application interface; the electronic device determines the size of each interface element in the application interface based on the screen size of the electronic device and/or the size of the application interface, and the interface attribute of the application interface; and the electronic device determines the layout parameter of the application interface based on the size of each interface element in the application interface and the interface attribute of the application interface.

In this way, the layout parameter of the application interface may be automatically determined based on the current screen size, so that the interface layout of the application interface adapts to the current screen size.

In a possible design, a corresponding attribute priority is set for each interface attribute of the application interface, and that the electronic device determines the size of each interface element in the application interface based on the screen size of the electronic device and/or the size of the application interface, and the interface attribute of the application interface includes:

The electronic device determines an intermediate value of the size of each interface element in the application interface based on a first attribute, and the screen size of the electronic device and/or the size of the application interface; and the electronic device adjusts the intermediate value of the size of each interface element in the application interface based on a second attribute, and the screen size of the electronic device and/or the size of the application interface, to obtain the size of each interface element in the application interface, where the first attribute and the second attribute are any two interface attributes of the application interface, and an attribute priority of the first attribute is higher than an attribute priority of the second attribute.

In the foregoing manner, the attribute priority is set, so that the size of each interface element may be set based on a primary/secondary priority of a preset attribute, and corresponding display effect can be highlighted based on a specific requirement.

In a possible design, the application interface includes K interface elements, and that the electronic device determines the layout parameter of the application interface based on the size of each interface element in the application interface and the interface attribute of the application interface includes:

The electronic device determines layout parameters of T interface elements in the K interface elements in a remaining space based on the remaining space of the application interface, and the size of each interface element in the application interface and the interface attribute of the application interface; and the electronic device updates the remaining space; and if the remaining space is greater than a preset threshold, returns to the step that the electronic device determines layout parameters of T interface elements in the K interface elements in a remaining space based on the remaining space of the application interface.

In the foregoing manner, continuous iteration is performed based on the remaining space of the application interface, and the layout parameters of the T interface elements in the remaining space can be determined each time, so that layout parameters may be respectively set for interface elements of different batches, to meet a personalized setting requirement of the interface elements.

According to a second aspect, an embodiment of this application provides an application interface display method. Both a first electronic device and a second electronic device are configured to display application interfaces of a target application, and a screen size of the first electronic device is different from a screen size of the second electronic device. The method includes:

The first electronic device displays a first application interface of the target application, where an interface layout of the first application interface corresponds to the screen size of the first electronic device or a size of the first application interface; and
the second electronic device displays a second application interface of the target application, where an interface layout of the second application interface corresponds to the screen size of the second electronic device or a size of the second application interface.

In a possible design, the interface layout of the first application interface is different from the interface layout of the second application interface in terms of at least a spacing between adjacent interface elements, a display area in the application interface and a display area in which each interface element is located, hiding or display of each interface element, a size of each interface element, and/or a quantity of repeatedly displayed interface elements.

In a possible design, an interface attribute of the first application interface includes a spacing attribute, and the spacing attribute is used to determine a spacing between adjacent interface elements in the first application interface.

In this way, the spacing between the adjacent interface elements in the first application interface can be adaptively determined, to improve display effect.

In a possible design, the spacing attribute is used to determine that the spacing between the adjacent interface elements in the application interface is the same, and a spacing between an interface element at an edge of the application interface and the edge of the application interface is the same or different; and/or
the spacing attribute is used to determine a maximum value and/or a minimum value of the spacing between the adjacent interface elements in the first application interface, and/or the spacing attribute is used to determine a maximum value and/or a minimum value of the spacing between the interface element at the edge of the first application interface and the edge of the first application interface.

On a premise of setting the maximum value and/or the minimum value of the spacing and setting whether the spacing between the adjacent interface elements in the first application interface and/or the spacing between the interface element at the edge of the first application interface and the edge of the first application interface are the same, the spacing between the adjacent interface elements in the first application interface and the spacing between the interface element at the edge of the first application interface and the edge of the first application interface are adaptively determined under a specific condition. This improves flexibility.

In a possible design, the spacing attribute includes a mapping relationship between the spacing between the adjacent interface elements in the application interface and a size of the adjacent interface element, and/or a mapping relationship between the spacing between the interface element at the edge of the application interface and the edge of the application interface and a size of the interface element at the edge of the application interface.

In this way, the spacing between the adjacent interface elements in the first application interface can be adaptively adjusted based on the size of the adjacent interface element, and the spacing between the interface element at the edge of the first application interface and the edge of the first application interface can be adaptively adjusted based on the size of the interface element at the edge of the first application interface.

In a possible design, the interface attribute of the first application interface includes an element arrangement attribute, and the element arrangement attribute is used to determine a display area in the first application interface and a display area in which each interface element is located.

In this way, the display area in the first application interface and the display area in which each interface element is located can be adaptively determined.

In a possible design, the element arrangement attribute includes a row attribute and/or a column attribute, the row attribute is used to determine a quantity of rows of the interface element in the first application interface and a row in which the interface element is located, and the column attribute is used to determine a quantity of columns of the interface element in the first application interface and a column in which the interface element is located.

In the foregoing manner, the row attribute and the column attribute are set, so that the quantity of rows of the interface element, the row in which the interface element is located, the quantity of columns of the interface element, and the column in which the interface element is located can be adaptively determined.

In a possible design, the row attribute includes a mapping relationship between a ratio of a length to a width of the first application interface and the quantity of rows of the interface element in the first application interface, and the column attribute includes a mapping relationship between the ratio of the length to the width of the first application interface and the quantity of columns of the interface element in the first application interface.

In the foregoing manner, because the ratio of the length to the width of the first application interface can indirectly reflect the screen size of the electronic device, the row attribute and/or the column attribute are/is determined based on the ratio of the length to the width of the first application interface, so that an interface element arrangement in the first application interface is more applicable to the screen size of the electronic device.

In a possible design, the row attribute includes at least one of a maximum quantity of rows, a minimum quantity of rows, a maximum quantity of row elements, and a minimum quantity of row elements, and the column attribute includes at least one of a maximum quantity of columns, a minimum quantity of columns, a maximum quantity of column elements, and a minimum quantity of column elements.

In a possible design, the interface attribute of the first application interface includes a hidden attribute, and the hidden attribute is used to determine whether to hide or display each interface element in the first application interface.

In this way, each interface element in the first application interface being hidden or displayed can be adaptively determined.

In a possible design, the hidden attribute includes a hidden priority corresponding to each interface element in the first application interface, and the interface element in the first application interface is hidden based on a hidden priority order of the interface element.

In the foregoing manner, the hidden priority of each interface element is set, so that an important interface element can be highlighted, to avoid display distortion, of a page element, caused by display of excessive interface elements due to the screen size.

In a possible design, the hidden attribute further includes a hidden element set and/or a maximum quantity of hidden elements, the hidden element set is a set of interface elements that are allowed to be hidden in the first application interface, and the maximum quantity of hidden elements is a maximum quantity of interface elements that are allowed to be hidden in the first application interface.

In the foregoing manner, the hidden element set and/or the maximum quantity of hidden elements are set, to further control hiding or display of the interface element in the first application interface.

In a possible design, the interface attribute of the first application interface includes a scaling attribute, and the scaling attribute is used to determine a size of each interface element in the first application interface.

In this way, the size of each interface element in the first application interface can be adaptively determined, to improve the display effect.

In a possible design, the scaling attribute is used to determine a scaling ratio of the size of each interface element in the first application interface, and a scaling ratio of a size of any interface element is obtained based on a width of the interface element, and the screen size of the electronic device and/or the size of the first application interface.

In a possible design, the interface attribute of the first application interface includes a repetition attribute, and the repetition attribute is used to determine a quantity of repeatedly displayed interface elements in the first application interface.

In this way, whether each interface element in the first application interface is repeatedly displayed can be adaptively determined, to improve the display effect.

In a possible design, the quantity of repeatedly displayed interface elements in the first application interface is determined based on the repetition attribute, the size of each interface element in the first application interface, and the ratio of the length to the width of the first application interface.

In the foregoing manner, because the ratio of the length to the width of the first application interface can indirectly reflect the screen size of the electronic device, the quantity of repeatedly displayed interface elements is determined based on the ratio of the length to the width of the first application interface, so that repeated display of the interface element in the first application interface is more applicable to the screen size of the electronic device.

In a possible design, before that the first electronic device displays a first application interface of the target application, the method further includes:

The electronic device obtains the interface attribute of the first application interface; the electronic device determines the size of each interface element in the first application interface based on the screen size of the electronic device and/or the size of the first application interface, and the interface attribute of the first application interface; and the electronic device determines the layout parameter of the first application interface based on the size of each interface element in the first application interface and the interface attribute of the first application interface.

In this way, the layout parameter of the first application interface may be automatically determined based on the current screen size, so that the interface layout of the first application interface adapts to the current screen size.

According to a third aspect, this application provides an electronic device. The electronic device includes one or more processors and one or more memories.

The one or more memories store one or more computer programs, the one or more computer programs include instructions; and when the instructions are executed by the one or more processors, the electronic device is enabled to perform the method according to any one of the possible methods in the first aspect.

According to a fourth aspect, this application provides a system. The system includes a first electronic device and a second electronic device, both the first electronic device and the second electronic device are configured to display application interfaces of a target application, and a screen size of the first electronic device is different from a screen size of the second electronic device;
the first electronic device is configured to display a first application interface of the target application, where an interface layout of the first application interface corresponds to the screen size of the first electronic device or a size of the first application interface; and
the second electronic device is configured to display a second application interface of the target application, where an interface layout of the second application interface corresponds to the screen size of the second electronic device or a size of the second application interface.

According to a fifth aspect, this application provides a computer-readable storage medium. The computer-readable storage medium includes a computer program; and when the computer program is run on an electronic device, the electronic device is enabled to perform the method according to any one of the possible methods in the first aspect.

According to a sixth aspect, an embodiment of this application provides a chip. The chip includes a processor and a communication interface, and the communication interface is configured to receive code instructions, and transmit the code instructions to a processor. The processor is configured to invoke the code instructions transmitted by the communication interface to perform the steps of the processor according to either the first aspect or the second aspect.

According to a seventh aspect, this application further provides a computer program product including instructions; and when the computer program product is run, the method according to the foregoing aspects is performed.

For beneficial effects of the second aspect to the seventh aspect, refer to the beneficial effects of the first aspect. Details are not described again.

### BRIEF DESCRIPTION OF DRAWINGS

FIG. 1 is a diagram of a structure of an electronic device 100 according to an embodiment of this application;
FIG. 2a and FIG. 2b are diagrams of scenarios of an application interface display method according to an embodiment of this application;
FIG. 3a and FIG. 3b are diagrams of interface layouts corresponding to a uniform distribution type in a spacing attribute;
FIG. 4a to FIG. 4h are display effect diagrams in which interface elements are evenly distributed in an application interface;
FIG. 5a and FIG. 5b are display effect diagrams in which a spacing between interface elements is determined based on a size of the interface element;
FIG. 6a and FIG. 6b are diagrams of an interface layout corresponding to an element arrangement attribute;
FIG. 7a to FIG. 7d are display effect diagrams of an application interface corresponding to an element arrangement attribute;
FIG. 8a to FIG. 8d are display effect diagrams of an application interface corresponding to a hidden attribute;
FIG. 9a to FIG. 9d are display effect diagrams of an application interface corresponding to a scaling ratio;
FIG. 10a to FIG. 10d are display effect diagrams of an application interface corresponding to a repetition attribute;
FIG. 11 is a diagram of a development process corresponding to an interface display method according to an embodiment of this application;
FIG. 12 is a diagram of a software architecture corresponding to an application interface display method according to this application;
FIG. 13 is a diagram of loading of an application interface corresponding to an interface display method according to an embodiment of this application;
FIG. 14 is a schematic flowchart of steps of determining a spacing parameter of an application interface in an interface display method according to an embodiment of this application;
FIG. 15 is a schematic flowchart of steps of determining a layout parameter of an interface element in a remaining space in an interface display method according to an embodiment of this application;
FIG. 16 is a schematic flowchart of steps of determining a size of each interface element in an application interface in an interface display method according to an embodiment of this application; and
FIG. 17 is a diagram of a structure of an electronic device according to an embodiment of this application.

### DESCRIPTION OF EMBODIMENTS

The following clearly and completely describes the technical solutions in embodiments of this application with reference to the accompanying drawings in embodiments of this application.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" means one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

In embodiments of this application, the term "a plurality of" means two or more. In view of this, in embodiments of this application, "a plurality of" may also be understood as "at least two". "At least one" may be understood as one or more, for example, one, two, or more. For example, including at least one means that one, two, or more are included, and there is no limitation on which is included. For example, if at least one of A, B, and C is included, A, B, C, A and B, A and C, B and C, or A, B, and C may be included. Similarly, understanding of descriptions such as "at least one" is also similar. The term "and/or" describes an association relationship for describing associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects.

Unless otherwise specified, ordinal terms such as "first" and "second" used in embodiments of this application are for distinguishing between a plurality of objects, and are not intended to limit an order, a time sequence, a priority, or importance of the plurality of objects.

For ease of understanding, terms in embodiments of this application are explained and described, and explanations and descriptions of the terms are also used as a part of invention content of embodiments of this application.

Embodiments of this application provide an application interface display method. The application interface display method may be applied to an electronic device. The electronic device may be a device that provides voice and/or data connectivity for a user, for example, may include a handheld device having a wireless connection function, or a terminal device connected to a wireless modem. The terminal device may communicate with a core network through a radio access network (radio access network, RAN), and exchange a voice and/or data with the RAN. The terminal device may include user equipment (user equipment, UE), a wireless terminal device, a mobile terminal device, a subscriber unit (subscriber unit), a subscriber station (subscriber station), a mobile station (mobile station), a mobile (mobile) console, a remote station (remote station), an access point (access point, AP), a remote terminal (remote terminal), an access terminal device (access terminal), a user terminal device (user terminal), a user agent (user agent), a user device (user device), or the like. For example, the terminal device may include a mobile phone (or referred to as a "cellular" phone), a mobile computer, a tablet computer, a personal digital assistant (personal digital assistant, PDA), a media player, a smart television, a wearable device (for example, a smart watch, a smart helmet, or a smart band), a router, a set-top box, a sound box, a mobile phone, a tablet, a combination of two or more of the foregoing items, and the like. The electronic device may alternatively be a vehicle-mounted system, for example, an electric vehicle.

In some embodiments of this application, the electronic device may be a portable terminal including a built-in battery, for example, a mobile phone or a tablet computer, or may be a terminal not including a built-in battery. This is not limited in embodiments of this application. An example embodiment of the electronic device includes but is not limited to a portable electronic device running on iOS, Android, Microsoft, or another operating system. The foregoing portable electronic device may alternatively be another portable electronic device such as a digital camera. It should be further understood that, in some other embodiments of this application, the foregoing electronic device may not be the portable electronic device but a desktop computer.

Generally, the electronic device may support a plurality of applications, for example, one or more of the following applications: a camera application, an instant message receiving and sending application, and a photo management application. There may be a plurality of instant message receiving and sending applications, for example, WeChat, Tencent chat software (QQ), WhatsApp Messenger, Line (Line), instagram (instagram), Kakao Talk, and DingTalk. A user can send information such as a text, a voice, a picture, a video file, and various other files to another contact through the instant message receiving and sending application, or the user may implement a video or audio call with another contact through the instant message receiving and sending application.

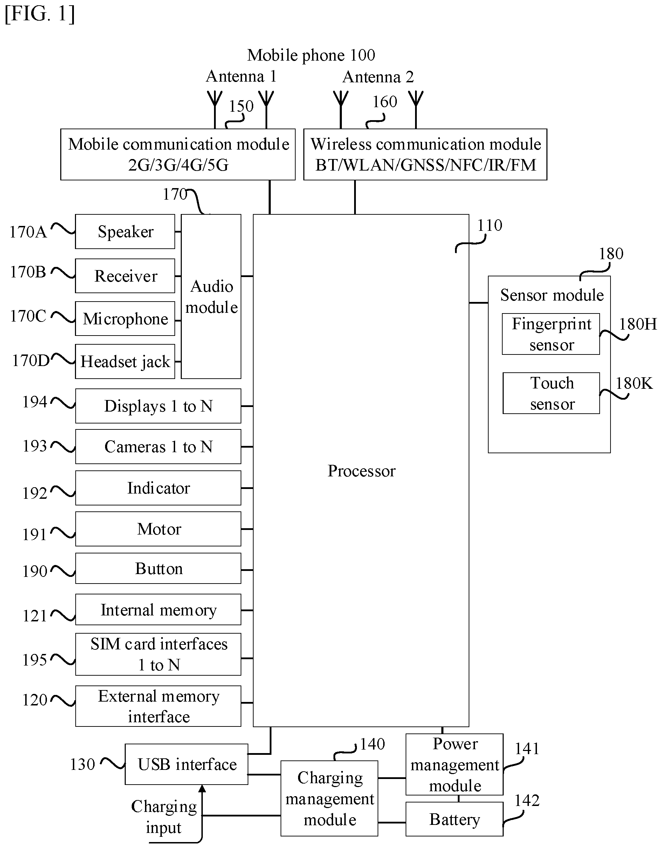

FIG. 1 is described by using an example in which the electronic device is a mobile phone. FIG. 1 is a diagram of a structure of a mobile phone 100.

The mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a fingerprint sensor 180H and a touch sensor 180K.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the mobile phone 100. The controller may generate an operation control signal based on an instruction operation code and a time sequence signal, to complete control instruction fetching and instruction execution. A memory may be further disposed in the processor 110, and is configured to store instructions and data. In some embodiments, the memory in the processor 110 is a cache memory. The memory may store instructions or data that have/has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that confirms to a USB standard specification, and may be specifically a mini (mini) USB interface, a micro (micro) USB interface, a USB type C (USB Type C) interface, or the like. The USB interface 130 may be configured to be connected to a power adapter to charge the mobile phone 100, or may be configured to perform data transmission between the mobile phone 100 and a peripheral device. When the mobile phone 100 is connected to a charging device (for example, a power adapter) through the USB interface 130, the mobile phone 100 may transmit electric energy to the power adapter through the USB interface 130. Specifically, a configuration channel (configuration channel, cc) in the USB interface 130 (for example, a USB type-C interface) of the mobile phone 100 detects a current sent by the power adapter, to implement current transmission between the mobile phone 100 and the power adapter.

It should be noted that, in FIG. 1, that the mobile phone 100 is connected to the power adapter through the USB interface 130 is used as an example. During actual application, the mobile phone 100 may alternatively be connected to the power adapter in another manner. For example, in a wireless charging scenario, the mobile phone 100 transmits electric energy by using a magnetic field coupling function between a transmit end coil and a receive end coil in the power adapter; or in a wired charging scenario, the mobile phone 100 is connected to the power adapter through another type of charging interface to transmit electric energy. Therefore, a connection manner between the mobile phone 100 and the power adapter is not limited in embodiments of this application.

It should be understood that when the mobile phone 100 is connected to the power adapter through the USB interface 130, electric energy transmission between the mobile phone 100 and the power adapter may be implemented through the USB interface 130; or when the mobile phone 100 is charged in a wireless charging manner, for example, the mobile phone 100 is wirelessly connected to the power adapter in a Bluetooth connection manner, electric energy transmission between the mobile phone 100 and the power adapter may be implemented in a Bluetooth connection manner. A process of transmitting electric energy between the mobile phone 100 and the power adapter includes a process of identifying a power supply capability of the power adapter by the mobile phone 100 and the like, and specific content is described below. The power adapter and the mobile phone 100 may support a same protocol, for example, a power delivery protocol (power delivery protocol, PDP), a super charging protocol (super charging protocol, SCP), or a fast charging protocol (fast charging protocol, FCP). This is not limited in embodiments of this application.

The power adapter may be connected to an external power supply (for example, home electricity), obtain electric energy from the external power supply (for example, the home electricity), and then input obtained electric energy to the mobile phone 100 (for example, input the obtained electric energy to the charging management module 140 in the mobile phone 100) through the USB interface 130. The charging management module 140 is configured to manage a charging process. For example, the charging management module 140 is configured to determine whether to provide the electric energy received from the USB interface 130 to the power management module 141 or to the battery 142. The power management module 141 receives electric energy input by the battery 142 and/or the charging management module 140, and supplies power to peripheral components such as the processor 110, the internal memory 121, the external memory, the display 194, the camera 193, and the wireless communication module 160 through the external memory interface 120. For example, when the mobile phone 100 is not connected to the power adapter, the power management module 141 receives the electric energy input by the battery 142, and supplies power to the components. When the mobile phone 100 is connected to the power adapter and is charged, the power management module 141 receives electric energy input by the charging management module 140, and supplies power to the components. Certainly, when the mobile phone 100 is connected to the power adapter and is charged, the power management module 141 may also receive electric energy input by the battery 142, and supply power to the components. It should be noted that the power management module 141 may supply power to the components in a sequence. For example, the power management module 141 supplies power to the processor 110 first, and then supplies power to another component. After the power management module 141 supplies power to the processor 110, the processor 110 is started, and the processor 110 may notify the power management module 141 of specific parts that are power supplied or specific parts that are not power supplied in another component.

Therefore, after the mobile phone 100 is connected to the external power supply (for example, the home electricity) through the power adapter, the charging process may be as follows:

After receiving the electric energy of the external power supply, the power adapter inputs the electric energy to the charging management module 140 through the USB interface 130. The charging management module 140 stores power for the battery 142 on one hand, and provides input electric energy for the power management module 141 on the other hand. Alternatively, the charging management module 140 stores power only for the battery 142, and the power management module 141 obtains electric energy from the battery 142 to supply power to the components (for example, the processor 110, the internal memory 121, the display 194, the camera 193, and the wireless communication module 160).

It should be noted that the power management module 141 may be connected to the processor 110, and the processor 110 may determine, through the power management module 141, specific components to be power supplied. For example, when the mobile phone 100 is powered on in a low power consumption working mode, the processor 110 determines that power needs to be supplied to the display 194 and power does not need to be supplied to the wireless communication module 160. In this case, the power management module 141 supplies power to the display 194, but does not supply power to the wireless communication module 160. It should be understood that, when the mobile phone 100 is not connected to the power adapter, the mobile phone 100 may supply power to the components by using electric energy stored in the battery 142.

A wireless communication function of the mobile phone 100 may be implemented through the antenna 1, the antenna 2, the mobile communication module 150, the wireless communications module 160, or the like. The antenna 1 and the antenna 2 are configured to transmit and receive electromagnetic wave signals. Each antenna in the mobile phone 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning option.

The mobile communication module 150 may provide a wireless communication solution that is applied to the mobile phone 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The wireless communication module 160 may provide a wireless communication solution that is applied to the mobile phone 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the mobile phone 100 is coupled to the mobile communication module 150, and the antenna 2 is coupled to the wireless communication module 160, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone 100 implements a display function through the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile phone 100 may include N displays 194, where N is a positive integer greater than 1.

The camera 193 is configured to capture a static image or a video. The camera 193 may include at least one front-facing camera and/or at least one rear-facing camera.

The internal memory 121 may be configured to store computer-executable program code. The executable program code includes instructions. The processor 110 executes various functional applications of the mobile phone 100 and data processing by running instructions stored in the internal memory 121. The internal memory 121 may include a program storage area and a data storage area. The program storage area may store an operating system, software code of at least one application (for example, a camera application or a WeChat application), and the like. The data storage area may store data (for example, an image and a video) and the like generated in a process of using the mobile phone 100. In addition, the internal memory 121 may include a high-speed random access memory, or may include a nonvolatile memory, for example, at least one magnetic disk storage device, a flash memory, or a universal flash storage (universal flash storage, UFS). Specifically, the internal memory 121 may store a software module/code of the power-on control method provided in embodiments of this application. When the processor 110 runs the software module/code, a corresponding procedure step is performed. The internal memory 121 may further store values such as a preset voltage, a preset current, and a preset power.

The external memory interface 120 may be configured to be connected to an external memory card, for example, a micro (micro) secure digital (secure digital, SD) card, to extend a storage capability of the mobile phone 100. The external memory card communicates with the processor 110 through the external memory interface 120, to implement a data storage function. For example, files such as music and videos are stored in the external storage card.

Certainly, the software module/code of the power-on control method provided in embodiments of this application may also be stored in the external memory, and the processor 110 may run the software module/code through the external memory interface 120, to perform the corresponding procedure step. The values such as the preset voltage, the preset current, and the preset power in the mobile phone 100 may also be stored in the external memory.

The mobile phone 100 may implement an audio function, for example, music playing, recording, or voice call, through the audio module 170, the speaker 170A, the receiver 170B, the microphone 170C, the headset jack 170D, the application processor, and the like.

The fingerprint sensor 180H is configured to collect a fingerprint. The mobile phone 100 may use a feature of the collected fingerprint to implement fingerprint-based unlocking, application lock access, fingerprint-based photographing, fingerprint-based call answering, and the like.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of the touch event. A visual output related to the touch operation may be provided through the display 194. In some other embodiments, the touch sensor 180K may alternatively be disposed on a surface of the mobile phone 100, and is located at a location different from that of the display 194.

Certainly, the sensor module 180 may further include another sensor, for example, a pressure sensor, a gyroscope sensor, a barometric pressure sensor, a magnetic sensor, an acceleration sensor, a distance sensor, an optical proximity sensor, a temperature sensor, an ambient light sensor, or a bone conduction sensor. This is not limited in embodiments of this application.

The button 190 includes a power button, a volume button, and the like. The button 190 may be a mechanical button, or may be a touch button. The mobile phone 100 may receive a button input, and generate a button signal input related to a user setting and function control of the mobile phone 100. A power-on instruction, a confirmation instruction, and the like in embodiments of this application may be input by the key 190, or may certainly be input by the display 194.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect.

The indicator 192 may be an indicator light, and may be configured to indicate a charging status and a power change, or may be configured to indicate a message, a missed call, a notification, and the like.

The SIM card interface 195 is configured to be connected to a SIM card. The SIM card may be inserted into the SIM card interface 195 or removed from the SIM card interface 195, to implement contact with or separation from the mobile phone 100.

It may be understood that the structure shown in FIG. 1 does not constitute a specific limitation on the mobile phone 100. In some other embodiments of this application, the mobile phone 100 may include more or fewer components than those shown in FIG. 1, or some components may be combined, or some components may be split, or components are arranged in different manners. The components shown in FIG. 1 may be implemented by hardware, software, or a combination of software and hardware.

An electronic device shown in FIG. 1 can be applied to an application interface display method provided in embodiments of this application. The following describes in detail the application interface display method provided in embodiments of this application.

The electronic device displays an application interface of a target application, where an interface layout of the application interface corresponds to a screen size of the electronic device or a size of the application interface, the interface layout of the application interface is determined based on a layout parameter of the application interface on the electronic device, the layout parameter is determined based on an interface attribute of the target application, and the screen size of the electronic device and/or the size of the display interface, and the interface attribute is a preset condition that constrains the layout parameter. The application interface may include an interface element, and the interface element is a basic unit that forms the application interface. For example, the interface element is a control. The interface attribute of the application interface includes at least one of the following: a spacing attribute, an element arrangement attribute, a hidden attribute, a scaling attribute, and a repetition attribute.

The spacing attribute is used to determine a spacing between adjacent interface elements in the application interface, the element arrangement attribute is used to determine a display area in the application interface and a display area in which each interface element is located, the hidden attribute is used to determine whether each interface element in the application interface is hidden or displayed, the scaling attribute is used to determine a size of each interface element in the application interface, and the repetition attribute is used to determine a quantity of repeatedly displayed interface elements in the application interface.

Another application interface display method provided in embodiments of this application may be applied to a first electronic device and a second electronic device, both the first electronic device and the second electronic device are configured to display application interfaces of a target application, and a screen size of the first electronic device is different from a screen size of the second electronic device. The method may be:

The first electronic device displays a first application interface of the target application, where an interface layout of the first application interface corresponds to the screen size of the first electronic device or a size of the first application interface; and the second electronic device displays a second application interface of the target application, where an interface layout of the second application interface corresponds to the screen size of the second electronic device or a size of the second application interface.

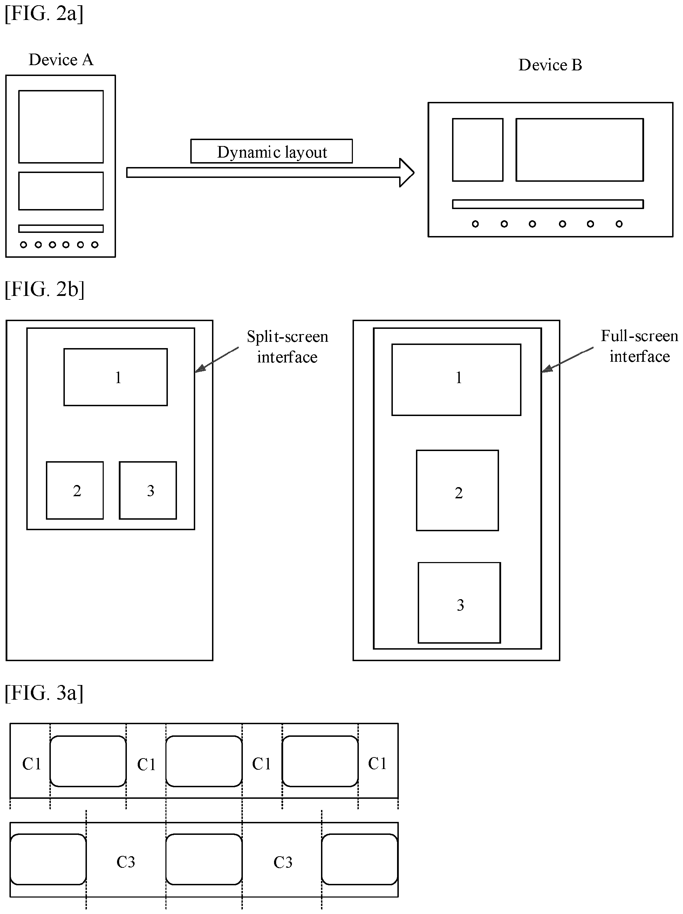

The application interface display method provided in embodiments of this application is applicable to a scenario shown in FIG. 2a. Both the first electronic device (a device A) and the second electronic device (a device B) are configured to display the application interfaces of the target application, and both the first electronic device (the device A) and the device B (the device B) are configured to display the application interfaces of the target application. In this case, the application interfaces of the target application are migrated between the device A and the device B. The first application interface displayed by the device A and the second application interface displayed by the device B are used as examples. Both an interface element in the first application interface and an interface element in the second application interface are from a same target application. Both the first application interface and the second application interface correspond to a same interface defined in the target application. For example, an identifier of the first application interface is the same as an identifier of the second application interface. For example, both the first application interface and the second application interface are startup interfaces of the target application, or both are setting interfaces. However, the interface layout of the first application interface corresponds to a screen size of the device A in a landscape mode, and the interface layout of the second application interface corresponds to a screen size of the device B in a portrait mode, so that when the target application is displayed on different electronic devices, each electronic device displays a corresponding application interface based on a screen size of the electronic device. Therefore, the application interface can adapt to the screen size of the electronic device, to achieve better display effect.

It should be noted that, for a same device, the application interface display method provided in embodiments of this application is also applicable to a scenario shown in FIG. 2b. For example, interface layouts of the device A in a split-screen state and a full-screen state may also be different.

It can be learned from the foregoing descriptions of the application interface display method that the first electronic device can adaptively determine the layout parameter of the first application interface based on the screen size of the electronic device and the interface attribute of the target application. In this way, the first electronic device can display the first application interface based on the layout parameter of the first application interface, so that the first application interface can be adaptively displayed based on the screen size of the electronic device, to achieve better display effect. The application interface may have interface attributes of a plurality of dimensions. Therefore, when displaying is performed on screens of electronic devices of different sizes, the electronic device may present application interfaces of different layouts based on different layout parameters of the application interfaces. The following describes in detail the layout of the application interface determined by the interface attribute of each dimension based on the interface attribute of each dimension of the application interface. Details are as follows:

### (1) Spacing attribute

The spacing attribute may be used to determine a spacing parameter of the application interface. For example, the spacing attribute may include a uniform distribution type, and uniform distribution is even distribution. A value (namely, an attribute value) of the uniform distribution type may be a default uniform distribution type or an internal uniform distribution type. The uniform distribution type may be specifically represented by using a preset value. For example, if the value is 0, it indicates that the uniform distribution type is the default uniform distribution type; or if the value is 1, it indicates that the uniform distribution type is the internal even distribution type. The spacing parameter may include a spacing between adjacent interface elements in the application interface and a spacing between an interface element at an edge of the application interface and the edge of the application interface. In addition, because a relative location relationship between interface elements may be predetermined, the spacing parameter may be determined based on the spacing attribute and the relative location relationship between the interface elements.

The default uniform distribution type means that the spacing between the adjacent interface elements in the application interface and the spacing between the interface element at the edge of the application interface and the edge of the application interface are the same, that is, the spacing between the interface element at the edge of the application interface and the edge of the application interface follows uniform distribution of the spacing. As shown in FIG. 3a, the spacing between the adjacent interface elements in the application interface and the spacing between the interface element at the edge of the application interface and the edge of the application interface are both C1. The internal uniform distribution type means that spacings between adjacent interface elements in the application interface are the same. The spacing between the interface element at the edge of the application interface and the edge of the application interface does not follow uniform distribution, and the spacings between the adjacent interface elements in the application interface are all C3. In addition, in FIG. 3a, only an interface element, in a horizontal direction, that is limited by the uniform distribution type is used as an example, and the same also applies to uniform distribution in a vertical direction. Details are not described herein again.

For example, the first electronic device may determine, based on the uniform distribution type and the screen size of the first electronic device, the spacing between the adjacent interface elements in the application interface and the spacing between the interface element at the edge of the application interface and the edge of the application interface. That the interface element in the first application interface is a row of interface elements is used as an example. A quantity of interface elements in the first application interface is N, where N is a positive integer. The first electronic device may determine, based on the screen size of the first electronic device, that a width of the first application interface is W, and widths of interface elements are sequentially w1, w2, w3, ..., wN.

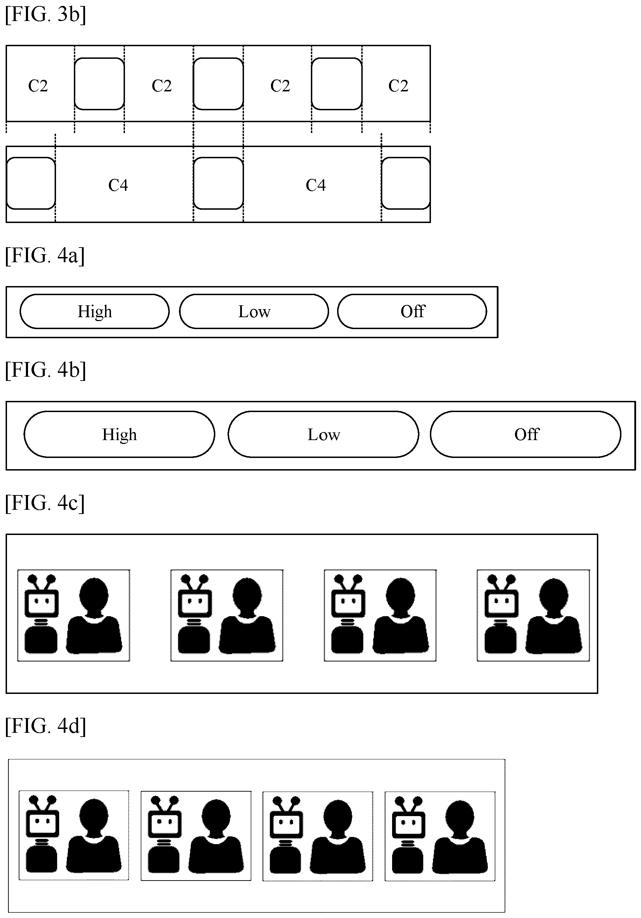

As shown in FIG. 3b, N is greater than 1. When the uniform distribution type is the default uniform distribution type, the spacing between the adjacent interface elements in the application interface and the spacing between the interface element at the edge of the application interface and the edge of the application interface are both C2, where C2=(W-Σ(w1, w2..., wN))/(N+1), and Σ(w1, w2, ..., wN) is a sum of w1, w2, ..., wN. When the uniform distribution type is the internal uniform distribution type, the spacing between the adjacent interface elements in the application interface is C4, where C4=(W-Σ(w1, w2, ..., wN))/(N-1). When N is 1, regardless of whether the uniform distribution type is the default uniform distribution type or the internal uniform distribution type, spacings between two sides of a unique interface element and the edge of the interface element are the same, and the unique interface element is displayed in the middle.

The spacing attribute may further include an attribute related to the uniform distribution type. For example, the spacing attribute further includes attributes such as a uniform distribution type option, a maximum spacing, and a minimum spacing. The uniform distribution type option may control whether the uniform distribution type takes effect when the application interface is displayed. Starting the uniform distribution type may also be referred to as enabling a uniform distribution capability. The maximum spacing and the minimum spacing are used to control a maximum value and a minimum value of the spacing between the adjacent interface elements in the application interface and a maximum value and a minimum value of the spacing between the interface element at the edge of the application interface and the edge of the application interface, namely, value ranges. Therefore, on a basis of the limitation of the uniform distribution type, the spacing when interface elements are uniformly distributed may be determined by using the limitation of the uniform distribution type, the maximum spacing, the minimum spacing, or the like. In this way, the spacing between the interface elements can be automatically calculated based on a configuration of the spacing attribute in the application interface of the target application with different screen sizes, so that the interface elements are uniformly distributed in the application interface.

Effect diagrams in which the interface elements are uniformly distributed in the application interface may be shown in FIG. 4a to FIG. 4d. FIG. 4a shows effect of uniformly distributing interface elements in an application interface with a screen size of 16:9 in a horizontal direction when the uniform distribution type is the default uniform distribution type. It can be seen that three interface elements "high", "low", and "off" are uniformly distributed in the horizontal direction. FIG. 4b shows effect of uniformly distributing interface elements in an application interface with a screen size of 4:3 in a horizontal direction when the uniform distribution type is the default uniform distribution type. It can be seen that three interface elements "high", "low", and "off" are uniformly distributed in the horizontal direction.

FIG. 4c shows effect of uniformly distributing interface elements in an application interface with a first screen size in a horizontal direction when the uniform distribution type is the internal uniform distribution type. It can be learned that interface elements (four pictures) in FIG. 4c are uniformly distributed in the horizontal direction. FIG. 4d shows effect of uniformly distributing interface elements in the application interface with a second screen size in a horizontal direction when the uniform distribution type is the internal uniform distribution type. It can be learned that interface elements (four pictures) in FIG. 4d are uniformly distributed in the horizontal direction. A width of the first screen size is greater than a width of the second screen size.

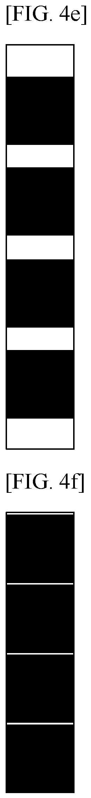

FIG. 4a to FIG. 4d are described by using only an example in which the interface elements in the application interface are uniformly distributed in the horizontal direction, and the same also applies to the case that the interface elements in the application interface are uniformly distributed in a vertical direction. FIG. 4e shows effect of uniformly distributing interface elements in the application interface with a third screen size in a vertical direction when the uniform distribution type is the default uniform distribution type. It can be seen that four interface elements (four squares) are uniformly distributed in the vertical direction. FIG. 4f shows effect of uniformly distributing interface elements in the application interface with a fourth screen size in a vertical direction when the uniform distribution type is the default uniform distribution type. It can be seen that four interface elements (four squares) are uniformly distributed in the vertical direction. A length of the third screen size is greater than a length of the fourth screen size.

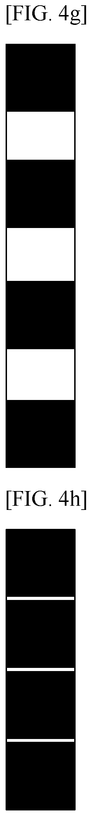

FIG. 4g shows effect of uniformly distributing interface elements in the application interface with a fifth screen size in a vertical direction when the uniform distribution type is the internal uniform distribution type. It can be seen that four interface elements (four squares) are uniformly distributed in the vertical direction. FIG. 4h shows effect of uniformly distributing interface elements in the application interface with a sixth screen size in a vertical direction when the uniform distribution type is the internal uniform distribution type. It can be seen that four interface elements (four squares) are uniformly distributed in the vertical direction. A length of the fifth screen size is greater than a length of the sixth screen size.

It should be noted that the foregoing spacing attribute is described by using only the uniform distribution type and a related attribute as an example. There are a plurality of manners of setting the spacing by using the spacing attribute. For example, a spacing ratio may be further set by using the spacing attribute. The spacing ratio means that a ratio of the spacing between the adjacent interface elements in the application interface to the spacing between the interface element at the edge of the application interface and the edge of the application interface is a preset ratio. The manner of setting the spacing may be limited by using the spacing attribute, so that when the application interface is displayed, the spacing between the interface elements in the layout of the application interface can be determined.

For example, the spacing between the interface elements can also be determined based on the size of the interface element. In a possible implementation, the spacing attribute includes a mapping relationship between the spacing between the adjacent interface elements in the application interface and a size of the adjacent interface element, and/or a mapping relationship between the spacing between the interface element at the edge of the application interface and the edge of the application interface and a size of the interface element at the edge of the application interface. The spacing between the interface elements may be the spacing between the adjacent interface elements and/or the spacing between the interface element at the edge of the application interface and the edge of the application interface. For example, when the sizes of the interface elements are inconsistent, the spacing may be set based on a positive correlation or a negative correlation between the spacing and the size of the interface element. For example, a direct ratio relationship or an inverse ratio relationship may be formed between the spacing between the interface elements and the length, the width, and the area of the interface element. The spacing between the interface elements may be a spacing between an interface element on a specific side and another interface element, for example, a spacing between interface elements on a left side. The spacing between the interface elements may also be a spacing between an interface element on two sides and another interface element. It can be specified that when a conflict occurs on a spacing between different interface elements, a larger spacing or a smaller spacing may be selected. For example, an area ratio of an interface element A to an interface element B is 1:4, and the spacing between the interface elements is the spacing between the interface elements on two the sides and the another interface element. It is specified that when the conflict occurs on the spacing between the different interface elements, the smaller spacing may be selected. For example, when the interface element A and the interface element B are adjacent, the spacing between the interface elements is calculated in a direct ratio based on the area of the interface element, and it is obtained that a spacing of the interface element A on two sides is 1 but a spacing of the interface element B on two sides is 4. In this case, a spacing between the interface element A and the interface element B is 1.

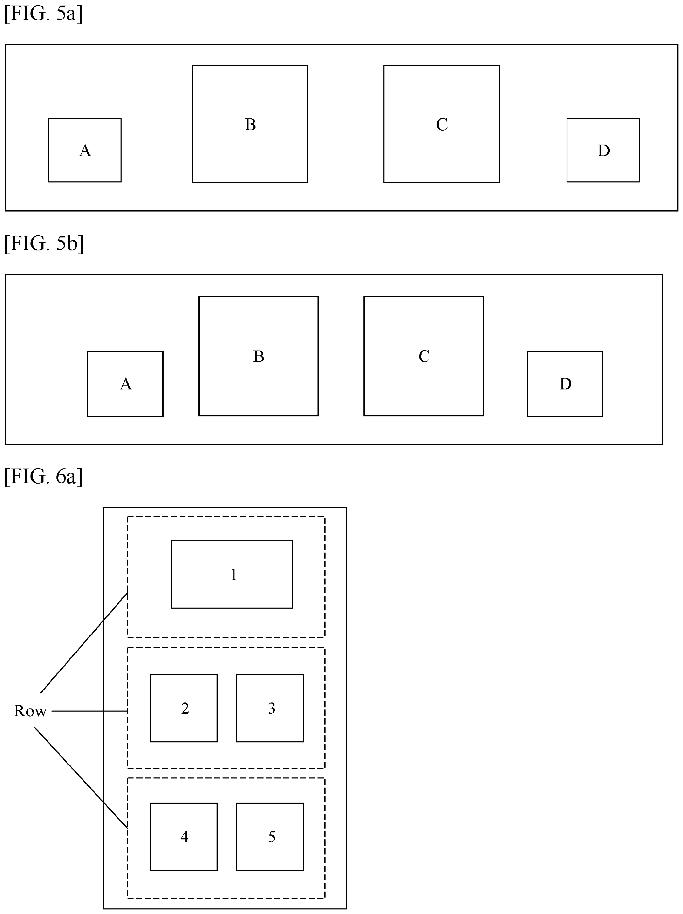

FIG. 5a is a diagram in which a spacing between interface elements is in a direct ratio to a length of the interface element. Ratios of lengths of an interface element A, an interface element B, an interface element C, and an interface element D are sequentially 1:2:2:1. Therefore, a key interface element in the application interface can be highlighted, and a large interface element and a small interface element are not displayed together in a centralized manner.

FIG. 5b is a diagram in which a spacing between interface elements is in an inverse ratio to a length of the interface element. Ratios of lengths of an interface element A, an interface element B, an interface element C, and an interface element D are sequentially 1:2:2:1. As a result, a large element may occupy more spacings for display, so that the interface element is more compactly displayed. It should be noted that, that the spacing between the interface elements is in a direct ratio to the length of the interface element and the spacing between the interface elements is in an inverse ratio to the length of the interface element are merely examples for description. A relationship between the spacing between the interface elements and the size of the interface element may be configured based on an actual requirement. This is not limited herein.

It can be learned from the related descriptions of the spacing attribute that, when the application interface of the target application is developed, the spacing parameter of the application interface does not need to be specified. The application interface of the target application may adaptively determine the spacing parameter in real time based on the spacing attribute when the application interface is displayed in different screen sizes, so that the spacing parameter is adapted to the current screen size, and better display effect can be achieved. In addition, the foregoing related descriptions of the spacing attribute is merely described by using the spacing attribute as an example. The spacing attribute may be combined with another attribute to determine the layout parameter of the application interface. For a more specific implementation, refer to subsequent descriptions.

### (2) Element arrangement attribute

The element arrangement attribute may be used to determine an element arrangement parameter in the application interface. For example, the element arrangement attribute may include a row attribute and/or a column attribute. In addition, because a relative location relationship between interface elements may be predetermined, the element arrangement parameter may be determined based on the relative location relationship between the interface elements and the element arrangement attribute. For example, interface elements of the application interface include an interface element 1, an interface element 2, an interface element 3, an interface element 4, and an interface element 5. The relative location relationship between the interface elements may include: the interface element 1 is located on the left side or above the interface element 2, the interface element 2 is located on the left side or above the interface element 3, the interface element 3 is located on the left side or above the interface element 4, and the interface element 4 is located on the left side or above the interface element 5.

A row of the application interface may be understood as a segment of horizontal display area, and that all or some of the interface elements are in the segment of display area may be understood as being in this row. For example, the row attribute may include at least one of a row element uniform distribution option, an arrangement direction, a maximum quantity of rows, a minimum quantity of rows, a maximum quantity of row elements, and a minimum quantity of row elements, and priorities that may be set for these items. The row element uniform distribution option may limit that quantities of interface elements in rows are the same, or interface elements in at most one row are different from interface elements in other rows, and the interface elements in the other rows are the same. An arrangement direction means that interface elements may be arranged in a row manner or in a column manner.

In a possible case, the row attribute includes a mapping relationship between a ratio of a length to a width of the application interface and the quantity of rows of the interface element in the application interface, and the column attribute includes a mapping relationship between the ratio of the length to the width of the application interface and the quantity of columns of the interface element in the application interface. The maximum quantity of rows, the minimum quantity of rows, the maximum quantity of row elements, and the minimum quantity of row elements can be set to values that match a screen length-width ratio. For example, if the arrangement direction is a direction parallel to the length of the screen, when the length-width ratio of the screen is greater than or equal to 3, both the maximum quantity of rows and the minimum quantity of rows are 1; or when the length-width ratio of the screen is greater than or equal to 2 and less than 3, the maximum quantity of rows is 3, and the minimum quantity of rows is 1.

The row layout parameter used by the row attribute to determine may include: a quantity of rows of the interface element in the application interface and a row in which the interface element is located. For example, as shown in FIG. 6a, the application interface has five interface elements in total, the row element uniform distribution option is turned on, the length-width ratio of the screen is 2.5, and the maximum quantity of rows is 3. In this case, the element arrangement parameter may be obtained as follows: the quantity of rows of the interface elements in the application interface is 3, a row in which the interface element 1 is located is 1, a row in which the interface elements 2 and 3 are located is 2, and a row in which the interface elements 4 and 5 are located is 3. That is, the application interface includes one row of one interface element, and two rows with two interface elements in each row.

Correspondingly, a column of the application interface may be understood as a segment of vertical display area, and that all or some of the interface elements are in the segment of display area may be understood as being in this column. For example, the column attribute may include at least one of a column element uniform distribution option, an arrangement direction, a maximum quantity of columns, a minimum quantity of columns, a maximum quantity of column elements, and a minimum quantity of column elements, and priorities that may be set for these items. The column element uniform distribution option may limit that quantities of interface elements in columns are the same, or interface elements in at most one column are different from interface elements in other columns, and the interface elements in the other columns are the same. An arrangement direction means that interface elements may be arranged in a direction parallel to a length of a screen, a width of a screen, or the like. The maximum quantity of columns, the minimum quantity of columns, the maximum quantity of column elements, and the minimum quantity of row elements can be set to values that match a screen length-width ratio. For example, if the arrangement direction is a direction parallel to the length of the screen, when the length-width ratio of the screen is greater than or equal to 3, both the maximum quantity of columns and the minimum quantity of columns are 1; or when the length-width ratio of the screen is greater than or equal to 2 and less than 3, the maximum quantity of columns is 3, and the minimum quantity of columns is 1.

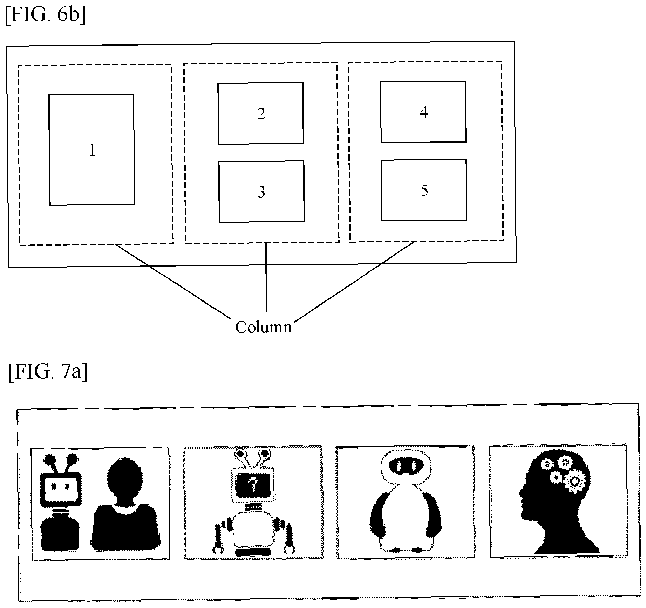

The column layout parameter used by the column attribute to determine may include: a quantity of columns of the interface element in the application interface and a column in which the interface element is located. For example, as shown in FIG. 6b, the application interface has five interface elements in total, the column element uniform distribution option is turned on, the length-width ratio of the screen is 2.5, and the maximum quantity of columns is 3. In this case, the interface element arrangement parameter may be obtained as follows: the quantity of columns of the interface elements in the application interface is 3, a column in which the interface element 1 is located is 1, a column in which the interface elements 2 and 3 are located is 2, and a column in which the interface elements 4 and 5 are located is 3. That is, the application interface includes one column of one interface element, and two columns with two interface elements in each column.

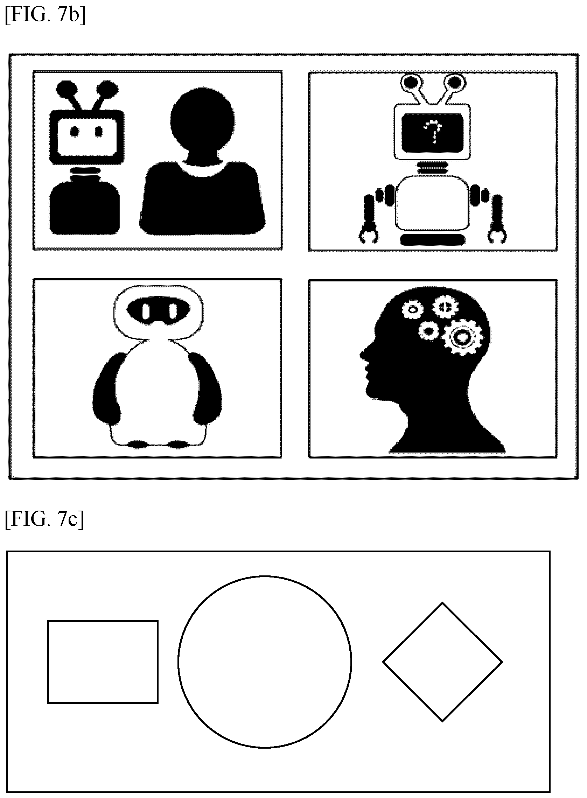

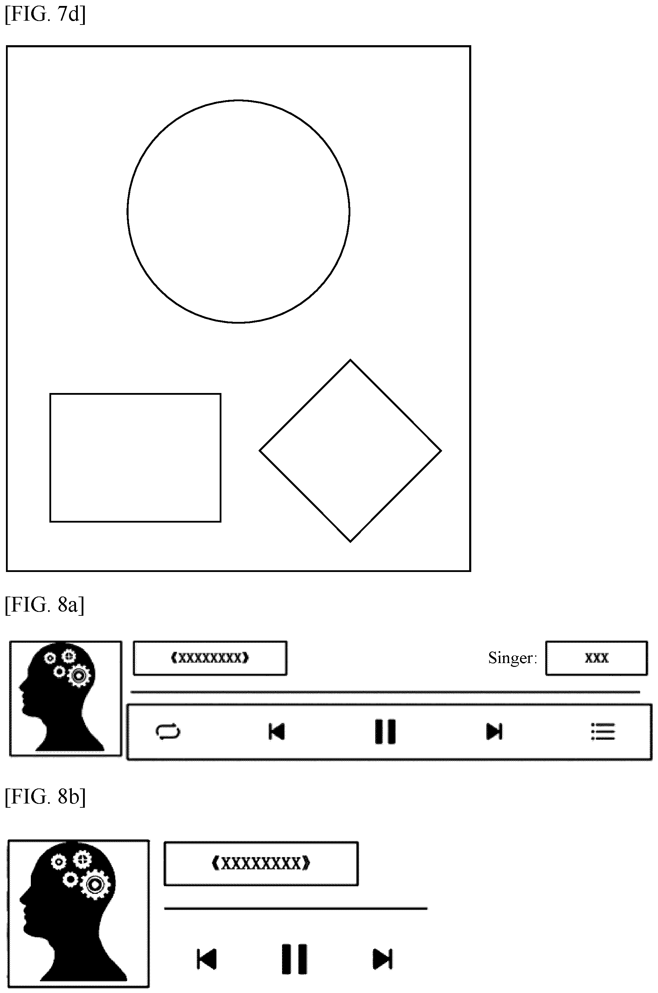

Based on the descriptions of the element arrangement attribute, effect diagrams displayed in the application interface may be shown in FIG. 7a to FIG. 7d.

It should be noted that the element arrangement attribute is described by using only some attributes as an example. There are a plurality of manners of setting the element arrangement parameter by using the element arrangement attribute. Details are not described herein again. It can be learned from the related descriptions of the element arrangement attribute that, when the application interface of the target application is developed, the element arrangement parameter of the application interface does not need to be specified. The application interface of the target application may adaptively determine the element arrangement attribute in real time based on the spacing attribute when the application interface is displayed in different screen sizes, so that the element arrangement parameter is adapted to the current screen size, and better display effect can be achieved. In addition, the foregoing related descriptions of the element arrangement attribute is merely described by using the element arrangement attribute as an example. The element arrangement attribute may be combined with another attribute to determine the layout parameter of the application interface. For a more specific implementation, refer to subsequent descriptions. For example, the present invention may be applied to photo display in an album/a gallery. When the element arrangement attribute is used together with the spacing attribute, each row may be evenly displayed in a plurality of rows, and the grid display effect can be achieved.

### (3) Hidden attribute

In some cases, for a reason of the screen size of the application interface, all interface elements of the application interface may be completely displayed on some screens, and consequently good display effect cannot be achieved. Therefore, some interface elements in the application interface may need to be hidden and not displayed, and only some interface elements are displayed. In this case, the hidden parameter in the application interface may be determined by using the hidden attribute, and the hidden parameter can indicate specific interface elements that are to be hidden and specific interface elements that are to be displayed.

For example, the hidden attribute may include at least one of a hidden priority of the interface element, a hidden element set, and a maximum quantity of hidden elements. An interface element with a higher priority is preferentially hidden. The hidden element set is a set of interface elements that are allowed to be hidden in the application interface. The maximum quantity of hidden elements is a maximum quantity of interface elements that are allowed to be hidden in the application interface.

The hidden parameter may include whether each interface element is hidden or displayed. In addition, because a relative location relationship between interface elements may be predetermined, the hidden parameter may be determined based on the hidden attribute and the relative location relationship between the interface elements. For an example of the relative location relationship between the interface elements, refer to an example in the hidden attribute.

The hidden priority can be set based on a feature of the interface element. For example, the hidden priority may be set based on a service type of the interface element. For example, a priority of an interface element of a picture type may be set to the lowest, and a priority of an interface element of a form may be set to the highest. Alternatively, the hidden priority may be set based on a width of the interface element. For example, the hidden priority is positively correlated with the width of the interface element, that is, a larger interface element is more preferentially hidden.

The hidden parameter may be determined based on the screen size and the hidden attribute. For example, the hidden parameter may be determined based on the length-width ratio of the screen. For example, when the length-width ratio of the screen of the terminal device is less than a preset length-width ratio, a quantity of hidden elements may be determined based on a difference between the length-width ratio of the screen and the preset length-width ratio. In addition, the to-be-hidden interface element in the application interface is determined based on the hidden priority, the hidden element set, and the quantity of hidden elements.

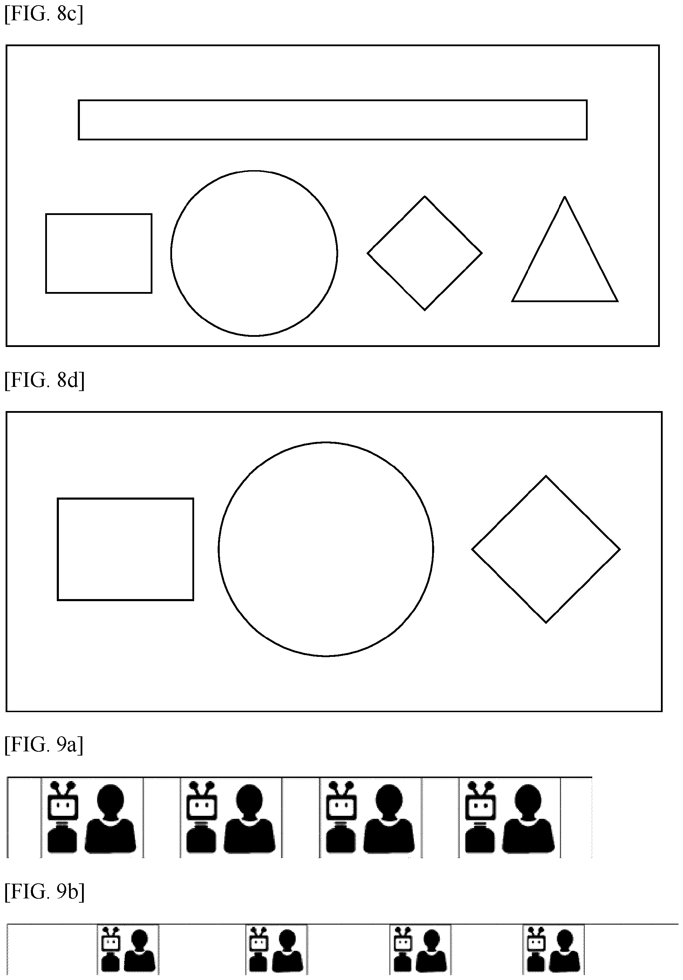

Based on the descriptions of the hidden attribute, effect diagrams displayed in the application interface may be shown in FIG. 8a to FIG. 8d. In a possible case, FIG. 8a shows a first application interface displayed on a first terminal device, and FIG. 8b shows a second application interface displayed on a second terminal device. The length-width ratio of the screen of the first terminal device is greater than the preset length-width ratio. However, the length-width ratio of the screen of the second terminal device is less than the preset length-width ratio. If all interface elements of the application interface are displayed on the screen of the second terminal device, display of the interface elements may be unclear. In this case, some interface elements of the application interface, for example "singer", are hidden.

It should be noted that the hidden attribute is described by using only some attributes as an example. There are a plurality of manners of setting the element to be hidden by using the hidden attribute. Details are not described herein again. It can be learned from the related descriptions of the hidden attribute that, when the application interface of the target application is developed, the hidden parameter of the application interface does not need to be specified. The application interface of the target application may adaptively determine the hidden parameter in real time based on the hidden attribute when the application interface is displayed in different screen sizes, so that the hidden parameter is adapted to the current screen size, and better display effect can be achieved. In addition, the hidden attribute may be combined with another attribute, for example, may be combined with the spacing attribute.

### (4) Scaling attribute

In some cases, for a reason of the screen size of the application interface, interface elements may be displayed on some screens only based on the screen size, and consequently display distortion of the interface element is caused and better display effect cannot be achieved. Therefore, some interface elements in the application interface may need to be scaled. In this case, the scaling parameter in the application interface may be determined by using the scaling attribute, and the scaling parameter can indicate specific interface elements that are to be scaled and specific interface elements that are to be displayed.

For example, the scaling attribute may include at least one of a size scaling ratio of the interface element and an element scaling width value. The element size ratio is a ratio range of interface elements that are allowed to be scaled in the application interface. The element scaling width value is a width value of the screen size that is in the application interface and that triggers scaling of the interface element. The size scaling ratio may be obtained based on a width of the interface element, and the screen size of the electronic device and/or the size of the application interface.

The scaling parameter may include the size of each interface element. In addition, because a relative location relationship between interface elements may be predetermined, the scaling parameter may be determined based on the scaling attribute and the relative location relationship between the interface elements. For an example of the relative location relationship between the interface elements, refer to an example in the scaling attribute.

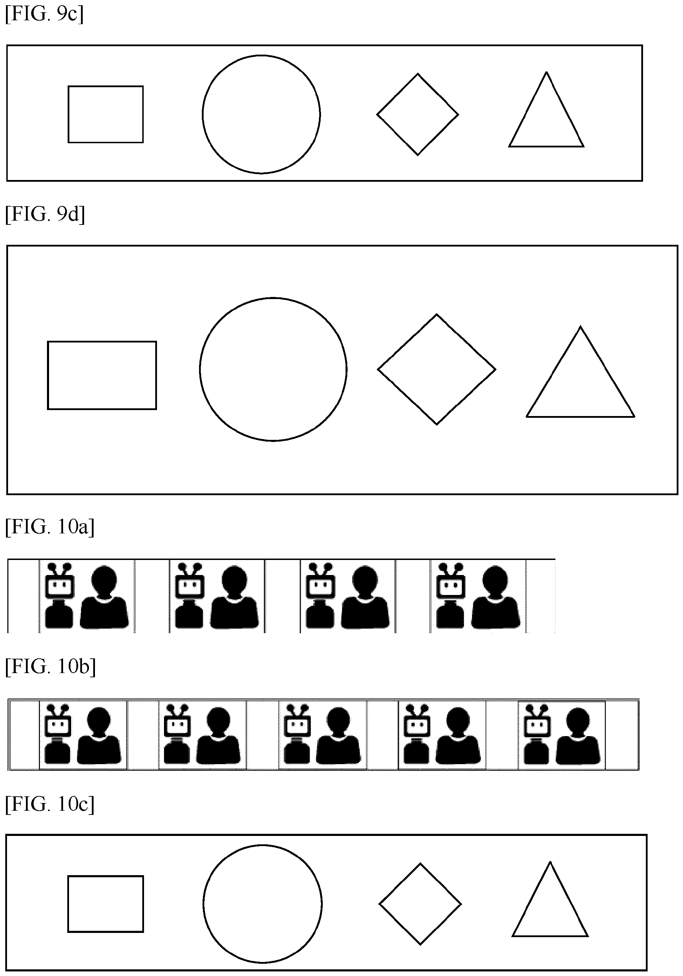

Based on the descriptions of the scaling attribute, effect diagrams displayed in the application interface may be shown in FIG. 9a to FIG. 9d. In a possible case, FIG. 9a shows a first application interface displayed on a first terminal device, and FIG. 9b shows a second application interface displayed on a second terminal device. An element scaling width value of the first terminal device is greater than a preset width value. An element scaling width value of the second terminal device is less than the preset width value. When the application interface includes interface elements of different sizes, the interface elements are also repeatedly displayed. FIG. 9c and FIG. 9d show display effect of the application interface.

It should be noted that the scaling attribute is described by using only some attributes as an example. There are a plurality of manners of setting element scaling by using the scaling attribute. Details are not described herein again. It can be learned from the related descriptions of the scaling attribute that, when the application interface of the target application is developed, the scaling parameter of the application interface does not need to be specified. The application interface of the target application may adaptively determine the scaling parameter in real time based on the scaling attribute when the application interface is displayed in different screen sizes, so that the hidden parameter is adapted to the current screen size, and better display effect can be achieved. In addition, the scaling attribute may be combined with another attribute, for example, may be combined with the spacing attribute.

### (5) Repetition attribute

In some cases, for a reason of the screen size of the application interface, interface elements may be displayed on some screens only based on the screen size, and consequently display distortion of the interface element is caused and better display effect cannot be achieved. Therefore, some interface elements in the application interface may need to be repeated. In this case, the repetition parameter in the application interface may be determined by using the repetition attribute, and the repetition parameter can indicate specific interface elements that are to be repeated and specific interface elements that are to be displayed.

For example, the repetition attribute may include at least one of an element repeatable quantity of the interface element and an element repetition width value. The element repeatable quantity is a ratio of interface elements that are allowed to be repeated in the application interface. The element repetition width value is a width value of the screen size that is in the application interface and that triggers repetition of the interface element.

The repetition parameter may include a repeatable quantity of each interface element. In addition, because a relative location relationship between interface elements may be predetermined, the repetition parameter may be determined based on the repetition attribute and the relative location relationship between the interface elements. For an example of the relative location relationship between the interface elements, refer to an example in the repetition attribute.

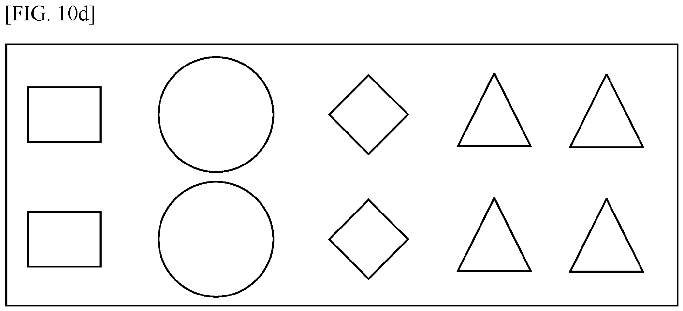

Based on the descriptions of the repetition attribute, effect diagrams displayed in the application interface may be shown in FIG. 10a to FIG. 10d. In a possible case, FIG. 10a shows a first application interface displayed on a first terminal device, and FIG. 10b shows a second application interface displayed on a second terminal device. An element repetition width value of the first terminal device is greater than a preset width value. An element repetition width value of the second terminal device is less than the preset width value. When the application interface includes interface elements of different sizes, the interface elements are also repeatedly displayed. FIG. 10c and FIG. 10d show display effect of the application interface.

It should be noted that the repetition attribute is described by using only some attributes as an example. There are a plurality of manners of setting element repetition by using the repetition attribute. Details are not described herein again. It can be learned from the related descriptions of the repetition attribute that, when the application interface of the target application is developed, the repetition parameter of the application interface does not need to be specified. The application interface of the target application may adaptively determine the repetition parameter in real time based on the scaling attribute when the application interface is displayed in different screen sizes, so that the repetition parameter is adapted to the current screen size, and better display effect can be achieved. In addition, the repetition attribute may be combined with another attribute, for example, may be combined with the spacing attribute.

According to related descriptions of the interface attributes of the foregoing dimensions, an external display result corresponding to the interface display method provided in embodiments of this application can be learned. The following describes an internal implementation principle corresponding to the interface display method provided in embodiments of this application.

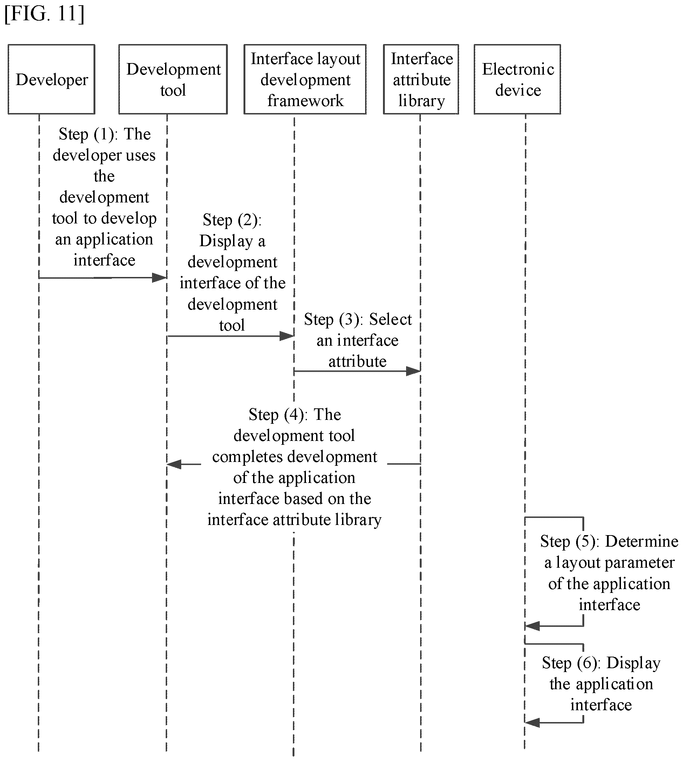

FIG. 11 is a diagram of a development process corresponding to an interface display method according to an embodiment of this application.
Step (1)t: A developer uses a development tool to develop am application interface.
Step (2): The development tool invokes a development framework to display a development interface of the development tool.
Step (3): The development tool invokes the framework to select, from an interface attribute library, an interface attribute corresponding to the development interface.
Step (4): The development tool completes development of the application interface based on the interface attribute library.
Step (5): An electronic device determines a layout parameter of the application interface based on a screen size of the electronic device.
Step (6): The electronic device displays the application interface.

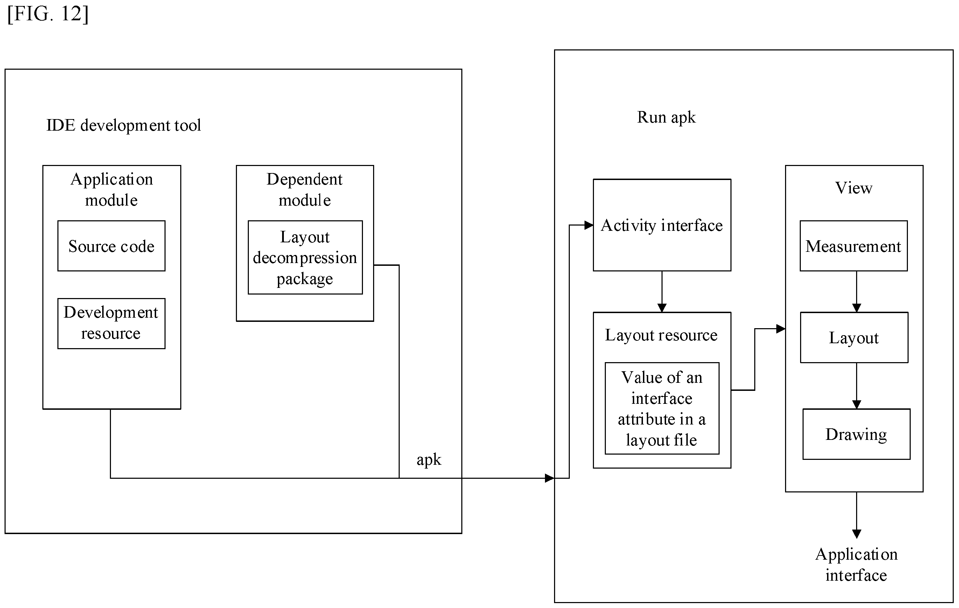

In the application development process in FIG. 11, the corresponding interface attribute needs to be configured in a software architecture corresponding to the application interface display method provided in this application, to achieve display effect of the application interface shown in FIG. 3a to FIG. 10b. FIG. 12 shows a software architecture corresponding to an application interface display method according to this application.

The software architecture corresponding to the application interface display method provided in this application includes a development tool and a target application. In FIG. 12, an example in which the development tool is an integrated development environment (IDE, integrated development environment) development tool and the target application is an Android (Android) apk is used for description.

The IDE development tool includes an application module and a dependent module. The application module includes source code and a development resource, and the development resource includes a layout file (for example, in an xml format). The dependent module includes a layout decompression package of an interface attribute of an application interface. For example, the layout decompression package is an aar package. After the IDE development tool is used for development and packaging, an APK can be generated. The APK can be installed on an electronic device, for example, installed on a mobile phone, and includes an activity interface (Activity), a layout resource (Layout resource), and a view (View). The layout resource includes an Android native interface attribute and a customized interface attribute. A terminal device can create an application interface based on the activity, and write an attribute value into an interface attribute in a layout file of the application interface through an attribute value assignment interface. Then, the electronic device measures, arranges, and draws an attribute in an effective layout file by using the view, and renders the application interface to a screen of the electronic device for presentation to the user. In a view measurement process, the terminal device can determine a layout parameter of the application interface based on the attribute in the layout file. The terminal device may display the application interface based on the layout parameter.

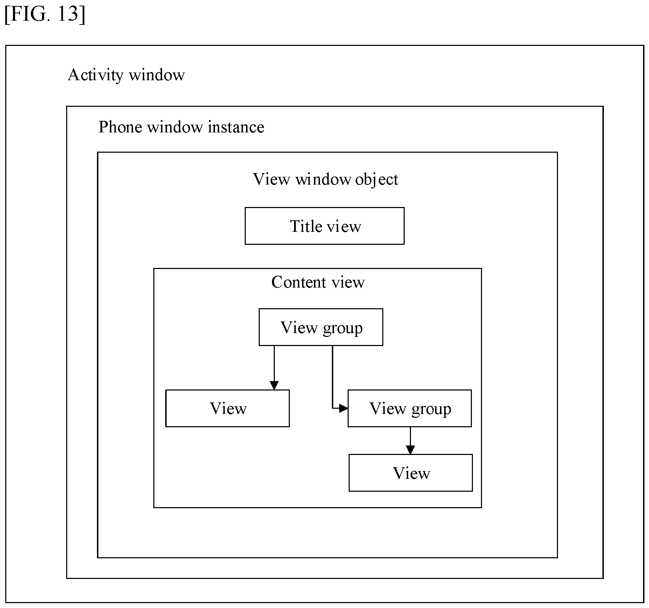

FIG. 13 is a diagram of loading of an application interface corresponding to an interface display method according to an embodiment of this application. FIG. 13 shows a process in which a layout parameter of an active window (Activity) is transferred to a view (view) based on a hierarchical relationship in a loading process. The view is loaded based on the layout parameter, and an application interface is loaded and displayed. Any activity has one window object, and the window object is a phone window (PhoneWindow) instance. In Android, the window instance may be managed through a window manager (WindowManager) in the activity. The PhoneWindow has one view window object (DecorView). The DecorView is an interface layout framework (FrameLayout). After receiving a layout file resource ID transferred from the activity, the DecorView converts a layout resource ID into a view through a layout inflater (layoutInflater), adds the view to the DecorView, and displays an application interface on the screen of the electronic device through a display service in a resume (resume) phase. For example, the display service is WindowManagerService(), which is a service that transfers an application process to a system process and completes displaying.

As shown in FIG. 13, the DecorView includes a plurality of views, and each view can internally include a plurality of view groups (ViewGroup). In an activity initialization process, device initialization parameters obtained through WindowManager can be transferred to sub-views through view hierarchies one by one. Each sub-view corresponds to one application interface. The sub-views calculate sizes of the sub-views based on a parameter constraint transferred from a parent view and configurations of the sub-views. In this application, the layout file developed by the application developer is a child view in a content view (ContentView) or a title view (TitleView) in FIG. 13. When the application interface is run, a size of the view may be calculated based on a size parameter and an attribute value of an interface attribute transferred by the parent view, and a layout parameter of the application interface is determined based on the size of the view and the interface attribute.

Specifically, a process in which the electronic device determines the layout parameter of the application interface may be as follows:
The electronic device obtains the interface attribute of the application interface; and the electronic device determines the layout parameter of the application interface based on the screen size of the electronic device and the interface attribute of the application interface.

For example, the electronic device may determine a size of each interface element in the application interface based on the screen size of the electronic device and/or the size of the application interface, and the interface attribute of the application interface; and the electronic device determines the layout parameter of the application interface based on the size of each interface element in the application interface and the interface attribute of the application interface.

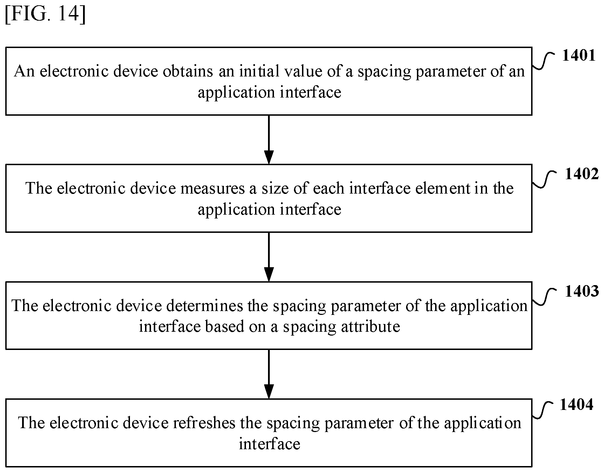

The interface attribute of the application interface is described in detail above. The following uses an example in which the interface attribute of the application interface is a spacing attribute, to describe how to determine the spacing parameter of the application interface based on the size of each interface element and the spacing attribute in the application interface. In this example, the spacing attribute affects only the spacing parameter, but does not affect the size of each interface element. Specific steps are shown in FIG. 14. FIG. 14 shows a process in which the electronic device determines the spacing parameter of the application interface based on the spacing attribute. Specific steps are as follows:
Step 1401: The electronic device obtains an initial value of the spacing parameter of the application interface.
Step 1402: The electronic device measures the size of each interface element in the application interface.
Step 1403: The electronic device determines the spacing parameter of the application interface based on the spacing attribute.

The interface element of the application interface may be in one row, or may be in a plurality of rows. If the interface element of the application interface is in one row, the electronic device determines a spacing parameter of a unique row of interface elements; or if the interface elements of the application interface are in a plurality of rows, the electronic device separately determines a spacing parameter of each row of interface elements in the plurality of rows of interface elements.

Step 1404: The electronic device refreshes the spacing parameter of the application interface.

In a possible implementation, the application interface includes K interface elements, and the step of determining the layout parameter of the application interface may be specifically as follows:
The electronic device determines layout parameters of T interface elements in the K interface elements in a remaining space based on the remaining space of the application interface, and the size of each interface element in the application interface and the interface attribute of the application interface; and the electronic device updates the remaining space; and if the remaining space is greater than a preset threshold, returns to the step that the electronic device determines layout parameters of T interface elements in the K interface elements in a remaining space based on the remaining space of the application interface.

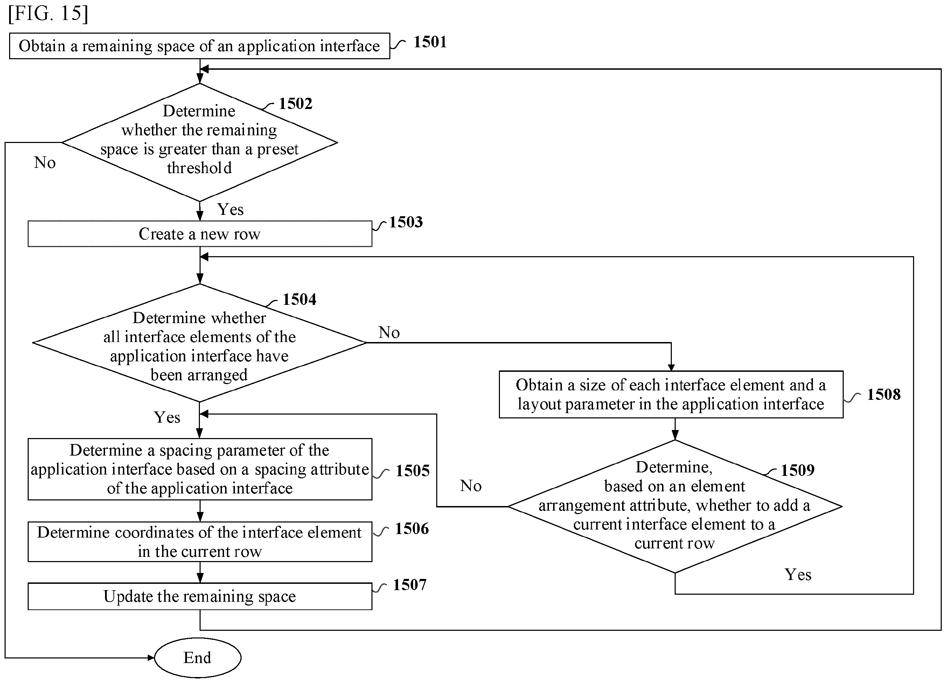

Specifically, the steps may be shown in FIG. 15.

Step 1501: Obtain the remaining space of the application interface.

The remaining space may be a quantity of rows, a quantity of columns, or a unit of a predefined display area For example, the remaining space may be three rows. The following uses the remaining space as the quantity of rows as an example.

Step 1502: Determine whether the remaining space is greater than a preset threshold.

If the remaining space is greater than the preset threshold, step 1503 is performed; otherwise, the procedure ends.

Step 1503: Create a new row. The row is used for the layout of the interface element.

Step 1504: Determine whether all interface elements of the application interface are arranged.

If all the interface elements of the application interface are arranged, step 1505 is performed; otherwise, step 1508 is performed.

Step 1505: Determine the spacing parameter of the application interface based on the spacing attribute of the application interface.

Step 1506: Determine coordinates of the interface element in the current row.

Step 1507: Update the remaining space.

After step 1507 is performed, the procedure returns to step 1502.

Step 1508: Obtain the size of each interface element and the layout parameter in the application interface.

Step 1509: Determine, based on the element arrangement attribute, whether to add the current interface element to the current row.

If the current interface element is added to the current row, the procedure returns to step 1504; otherwise, the procedure returns to step 1505.

As shown in FIG. 15, a remaining space of a list container needs to be obtained first, and no special processing is required when the space is insufficient. When the remaining space is sufficient (greater than the preset threshold), a new row needs to be created. That a new row is to be created relates to processing all remaining interface elements. All subspaces need to be traversed based on an average distribution type specified by a user and settings of the space or spacing in the application interface. All layout parameters are refreshed in batches based on the specified interface attributes, and the same applies to all the interface elements.

In a possible implementation, a corresponding attribute priority is set for each interface attribute of the application interface, and the process of determining the size of each interface element of the application interface may be as follows:

The electronic device determines an intermediate value of the size of each interface element in the application interface based on a first attribute, and the screen size of the electronic device and/or the size of the application interface; and the electronic device adjusts the intermediate value of the size of each interface element in the application interface based on a second attribute, and the screen size of the electronic device and/or the size of the application interface, to obtain the size of each interface element in the application interface, where
the first attribute and the second attribute are any two interface attributes of the application interface, and an attribute priority of the first attribute is higher than an attribute priority of the second attribute.

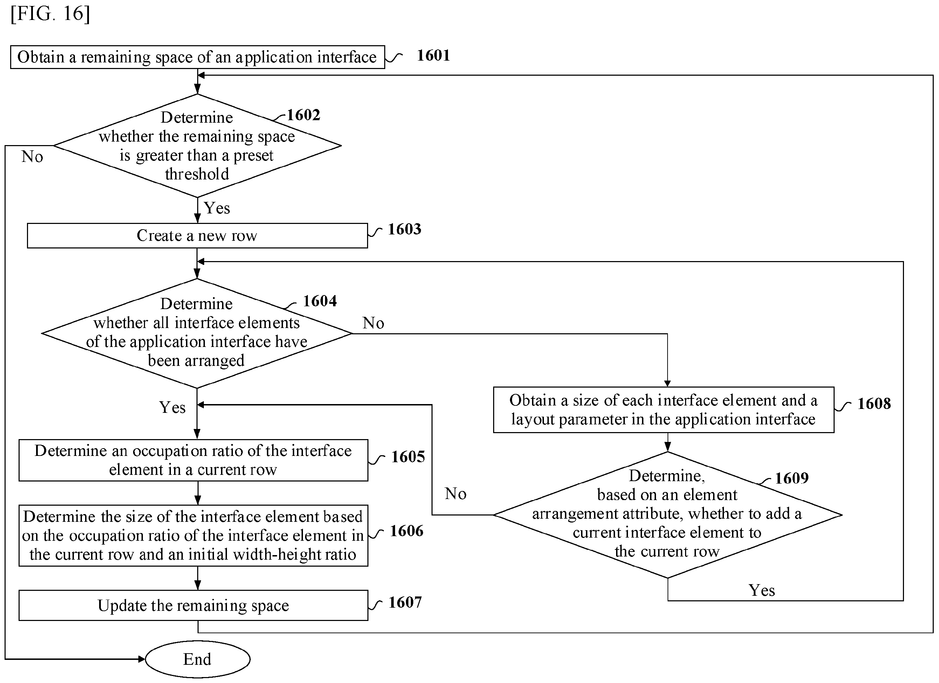

Specifically, the steps may be shown in FIG. 16.

Step 1601: Obtain the remaining space of the application interface.

The remaining space may be a quantity of rows, a quantity of columns, or a unit of a predefined display area For example, the remaining space may be three rows. The following uses the remaining space as the quantity of rows as an example.

Step 1602: Determine whether the remaining space is greater than a preset threshold.

If the remaining space is greater than the preset threshold, step 1603 is performed; otherwise, the procedure ends.

Step 1603: Create a new row. The row is used for the layout of the interface element.

Step 1604: Determine whether all interface elements of the application interface are arranged.

If all the interface elements of the application interface are arranged, step 1605 is performed; otherwise, step 1608 is performed.

Step 1605: Determine a ratio of the interface element in the current row.

The ratio of the interface element is an occupation ratio of a width of the interface element to a width of the application interface.

Step 1606: Determine the size of the interface element based on an occupation ratio of the interface element in the current row and an initial width-height ratio.

Step 1607: Update the remaining space.

After step 1607 is performed, the procedure returns to step 1602.

Step 1608: Obtain the size of each interface element in the application interface and the layout parameter.

Step 1609: Determine, based on the element arrangement attribute, whether to add the current interface element to the current row.

If the current interface element is added to the current row, the procedure returns to step 1604; otherwise, the procedure returns to step 1605.

As shown in FIG. 16, this is similar to FIG. 15, calculation still needs to be performed for the remaining space of the container, and the overall procedure needs to be combined with the adaptive procedure of the size of the interface element. Adaptation of the size of the interface element is mainly calculating scaled width and height information based on the width information calculated by the occupation ratio and the original width and height ratio information of the interface element. In addition, the width-height ratio is updated to the layout parameter of the interface element. Up, down, left, and right coordinates of the 1^{st} interface element are calculated, and then the interface element is arranged based on the up, down, left, and right coordinates, and then the layout of all the interface elements is traversed. All layout parameters are refreshed in batches based on the specified interface attributes, and the same applies to all the interface elements.

It should be noted that the implementations of this application may be randomly combined to achieve different technical effect. In embodiments provided in this application, the method provided in embodiments of this application is described from a perspective of the electronic device (the mobile phone 100) used as an execution entity. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a specific function in the foregoing functions is performed by using the hardware structure, the software module, or the combination of the hardware structure and the software module depends on particular applications and design constraints of the technical solutions.

With reference to the accompanying drawings, the following describes an electronic device provided in embodiments of this application, to implement the foregoing method embodiments of this application.

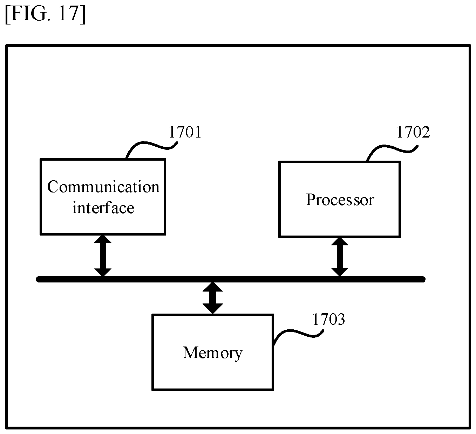

As shown in FIG. 17, some other embodiments of this application disclose an electronic device. The electronic device may include a communication interface 1701, one or more processors 1702, and one or more memories 1703. The foregoing components may be connected through one or more communication buses. The one or more computer programs may be stored in the memory 1703, and are configured to be executed by the one or more processors 1702. The one or more computer programs include instructions. When the instructions are executed by the one or more processors 1702, all or some of the steps recorded in the foregoing method embodiments may be implemented.

The processor 1702 may be a central processing unit (central processing unit, CPU), or an application-specific integrated circuit (application-specific integrated circuit, ASIC), or may be one or more integrated circuits configured to control program execution, or may be a baseband chip, or the like. There may be one or more memories 1703. The memory 1703 may be a read-only memory (read-only memory, ROM), a random access memory (random access memory, RAM), a magnetic disk memory, or the like.

The electronic device shown in FIG. 17 may be a mobile phone, an iPad, a laptop computer, a smart television, a wearable device (for example, a smart watch, a smart helmet, or a smart band), or the like. When the electronic device shown in FIG. 17 is a mobile phone, for a structure of the electronic device, refer to FIG. 1.

This application provides a system. The system includes a first electronic device and a second electronic device, both the first electronic device and the second electronic device are configured to display application interfaces of a target application, and a screen size of the first electronic device is different from a screen size of the second electronic device;
the first electronic device is configured to display a first application interface of the target application, where an interface layout of the first application interface corresponds to the screen size of the first electronic device or a size of the first application interface; and
the second electronic device is configured to display a second application interface of the target application, where an interface layout of the second application interface corresponds to the screen size of the second electronic device or a size of the second application interface.

In a possible design, the interface layout of the first application interface is different from the interface layout of the second application interface in terms of at least a spacing between adjacent interface elements, a display area in the application interface and a display area in which each interface element is located, hiding or display of each interface element, a size of each interface element, and/or a quantity of repeatedly displayed interface elements.

In a possible design, an interface attribute of the first application interface includes a spacing attribute, and the spacing attribute is used to determine a spacing between adjacent interface elements in the first application interface.

In this way, the spacing between the adjacent interface elements in the first application interface can be adaptively determined, to improve display effect.

In a possible design, the spacing attribute is used to determine that the spacing between the adjacent interface elements in the application interface is the same, and a spacing between an interface element at an edge of the application interface and the edge of the application interface is the same or different; and/or
the spacing attribute is used to determine a maximum value and/or a minimum value of the spacing between the adjacent interface elements in the first application interface, and/or the spacing attribute is used to determine a maximum value and/or a minimum value of the spacing between the interface element at the edge of the first application interface and the edge of the first application interface.

On a premise of setting the maximum value and/or the minimum value of the spacing and setting whether the spacing between the adjacent interface elements in the first application interface and/or the spacing between the interface element at the edge of the first application interface and the edge of the first application interface are the same, the spacing between the adjacent interface elements in the first application interface and the spacing between the interface element at the edge of the first application interface and the edge of the first application interface are adaptively determined under a specific condition. This improves flexibility.

In a possible design, the spacing attribute includes a mapping relationship between the spacing between the adjacent interface elements in the application interface and a size of the adjacent interface element, and/or a mapping relationship between the spacing between the interface element at the edge of the application interface and the edge of the application interface and a size of the interface element at the edge of the application interface.

In this way, the spacing between the adjacent interface elements in the first application interface can be adaptively adjusted based on the size of the adjacent interface element, and the spacing between the interface element at the edge of the first application interface and the edge of the first application interface can be adaptively adjusted based on the size of the interface element at the edge of the first application interface.

In a possible design, the interface attribute of the first application interface includes an element arrangement attribute, and the element arrangement attribute is used to determine a display area in the first application interface and a display area in which each interface element is located.

In this way, the display area in the first application interface and the display area in which each interface element is located can be adaptively determined.

In a possible design, the element arrangement attribute includes a row attribute and/or a column attribute, the row attribute is used to determine a quantity of rows of the interface element in the first application interface and a row in which the interface element is located, and the column attribute is used to determine a quantity of columns of the interface element in the first application interface and a column in which the interface element is located.

In the foregoing manner, the row attribute and the column attribute are set, so that the quantity of rows of the interface element, the row in which the interface element is located, the quantity of columns of the interface element, and the column in which the interface element is located can be adaptively determined.

In a possible design, the row attribute includes a mapping relationship between a ratio of a length to a width of the first application interface and the quantity of rows of the interface element in the first application interface, and the column attribute includes a mapping relationship between the ratio of the length to the width of the first application interface and the quantity of columns of the interface element in the first application interface.

In the foregoing manner, because the ratio of the length to the width of the first application interface can indirectly reflect the screen size of the electronic device, the row attribute and/or the column attribute are/is determined based on the ratio of the length to the width of the first application interface, so that an interface element arrangement in the first application interface is more applicable to the screen size of the electronic device.

In a possible design, the row attribute includes at least one of a maximum quantity of rows, a minimum quantity of rows, a maximum quantity of row elements, and a minimum quantity of row elements, and the column attribute includes at least one of a maximum quantity of columns, a minimum quantity of columns, a maximum quantity of column elements, and a minimum quantity of column elements.

In a possible design, the interface attribute of the first application interface includes a hidden attribute, and the hidden attribute is used to determine whether to hide or display each interface element in the first application interface.

In this way, each interface element in the first application interface being hidden or displayed can be adaptively determined.

In a possible design, the hidden attribute includes a hidden priority corresponding to each interface element in the first application interface, and the interface element in the first application interface is hidden based on a hidden priority order of the interface element.

In the foregoing manner, the hidden priority of each interface element is set, so that an important interface element can be highlighted, to avoid display distortion, of a page element, caused by display of excessive interface elements due to the screen size.

In a possible design, the hidden attribute further includes a hidden element set and/or a maximum quantity of hidden elements, the hidden element set is a set of interface elements that are allowed to be hidden in the first application interface, and the maximum quantity of hidden elements is a maximum quantity of interface elements that are allowed to be hidden in the first application interface.

In the foregoing manner, the hidden element set and/or the maximum quantity of hidden elements are set, to further control hiding or display of the interface element in the first application interface.

In a possible design, the interface attribute of the first application interface includes a scaling attribute, and the scaling attribute is used to determine a size of each interface element in the first application interface.

In this way, the size of each interface element in the first application interface can be adaptively determined, to improve the display effect.

In a possible design, the scaling attribute is used to determine a scaling ratio of each size of the interface element in the first application interface, and a scaling ratio of a size of any interface element is obtained based on a width of the interface element, and the screen size of the electronic device and/or the size of the first application interface.

In a possible design, the interface attribute of the first application interface includes a repetition attribute, and the repetition attribute is used to determine a quantity of repeatedly displayed interface elements in the first application interface.

In this way, whether each interface element in the first application interface is repeatedly displayed can be adaptively determined, to improve the display effect.

In a possible design, the quantity of repeatedly displayed interface elements in the first application interface is determined based on the repetition attribute, the size of each interface element in the first application interface, and the ratio of the length to the width of the first application interface.

In the foregoing manner, because the ratio of the length to the width of the first application interface can indirectly reflect the screen size of the electronic device, the quantity of repeatedly displayed interface elements is determined based on the ratio of the length to the width of the first application interface, so that repeated display of the interface element in the first application interface is more applicable to the screen size of the electronic device.

In a possible design, before that the first electronic device displays a first application interface of the target application, the method further includes:

The electronic device obtains the interface attribute of the first application interface; the electronic device determines the size of each interface element in the first application interface based on the screen size of the electronic device and/or the size of the first application interface, and the interface attribute of the first application interface; and the electronic device determines the layout parameter of the first application interface based on the size of each interface element in the first application interface and the interface attribute of the first application interface.

In this way, the layout parameter of the first application interface may be automatically determined based on the current screen size, so that the interface layout of the first application interface adapts to the current screen size.

An embodiment of this application further provides a computer-readable storage medium. The computer-readable storage medium stores computer instructions. When the computer instructions are invoked and executed by a computer, the computer may be enabled to complete the method in any one of the foregoing method embodiments or the possible designs of the foregoing method embodiments. In this embodiment of this application, the computer-readable storage medium is not limited. For example, the computer-readable storage medium may be a RAM (random-access memory, random access memory) or a ROM (read-only memory, read-only memory).

This application further provides a chip. The chip may include a processor and an interface circuit, configured to complete the method in any one of the foregoing method embodiments or the possible implementations of the foregoing method embodiments. "Coupling" means that two components are directly or indirectly combined with each other, and the combination may be fixed or mobile.

An embodiment of this application further provides a computer program product. The computer program product includes instructions. When the computer program product is run on an electronic device, the electronic device is enabled to perform all or some of the steps described in the foregoing method embodiments.

All or some of the foregoing embodiments may be implemented by using software, hardware, firmware, or any combination thereof. When the software is used to implement embodiments, all or some of embodiments may be implemented in a form of computer instructions. When the computer instructions are loaded and executed on a computer, the procedures or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable or an optical fiber) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and may write information to the storage medium. Optionally, the storage medium may be integrated into a processor. The processor and the storage medium may be disposed in an ASIC, and the ASIC may be disposed in a terminal device. Optionally, the processor and the storage medium may be disposed in different components of the terminal device.

These computer instructions may alternatively be loaded to a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although the present invention is described with reference to specific features and embodiments thereof, it is clear that various modifications and combinations may be made to them without departing from the scope of the present invention. Correspondingly, the specification and accompanying drawings are merely example descriptions of the present invention defined by the appended claims, and are considered as any or all modifications, variations, combinations or equivalents that cover the scope of the present invention. It is clear that a person skilled in the art can make various modifications and variations to the present invention without departing from the spirit and scope of the present invention. In this way, the present invention is intended to cover these modifications and variations provided that they fall within the scope of protection defined by the claims of the present invention and their equivalent technologies.

## Claims

1. An application interface display method, wherein the method comprises:
displaying, by an electronic device, an application interface of a target application, wherein an interface layout of the application interface corresponds to a screen size of the electronic device or a size of the application interface, the interface layout of the application interface is determined based on a layout parameter of the application interface on the electronic device, the layout parameter is determined based on an interface attribute of the application interface of the target application, and the screen size of the electronic device and/or the size of the application interface, and the interface attribute is a preset condition that constrains the layout parameter.

2. The method according to claim 1, wherein the interface attribute of the application interface comprises a spacing attribute, and the spacing attribute is used to determine a spacing between adjacent interface elements in the application interface.

3. The method according to claim 2, wherein the spacing attribute is used to determine that the spacing between the adjacent interface elements in the application interface is the same, and a spacing between an interface element at an edge of the application interface and the edge of the application interface is the same or different; and/or
the spacing attribute is used to determine a maximum value and/or a minimum value of the spacing between the adjacent interface elements in the application interface, and/or the spacing attribute is used to determine a maximum value and/or a minimum value of the spacing between the interface element at the edge of the application interface and the edge of the application interface.

4. The method according to claim 2 or 3, wherein the spacing attribute comprises a mapping relationship between the spacing between the adjacent interface elements in the application interface and a size of the adjacent interface element, and/or a mapping relationship between the spacing between the interface element at the edge of the application interface and the edge of the application interface and a size of the interface element at the edge of the application interface.

5. The method according to any one of claims 1 to 4, wherein the interface attribute of the application interface comprises an element arrangement attribute, and the element arrangement attribute is used to determine a display area in the application interface and a display area in which each interface element is located.

6. The method according to claim 5, wherein the element arrangement attribute comprises a row attribute and/or a column attribute, the row attribute is used to determine a quantity of rows of the interface element in the application interface and a row in which the interface element is located, and the column attribute is used to determine a quantity of columns of the interface element in the application interface and a column in which the interface element is located.

7. The method according to claim 6, wherein the row attribute comprises a mapping relationship between a ratio of a length to a width of the application interface and the quantity of rows of the interface element in the application interface, and the column attribute comprises a mapping relationship between the ratio of the length to the width of the application interface and the quantity of columns of the interface element in the application interface.

8. The method according to claim 6 or 7, wherein the row attribute comprises at least one of a maximum quantity of rows, a minimum quantity of rows, a maximum quantity of row elements, and a minimum quantity of row elements, and the column attribute comprises at least one of a maximum quantity of columns, a minimum quantity of columns, a maximum quantity of column elements, and a minimum quantity of column elements.

9. The method according to any one of claims 1 to 8, wherein the interface attribute of the application interface comprises a hidden attribute, and the hidden attribute is used to determine whether each interface element in the application interface is hidden or displayed.

10. The method according to claim 9, wherein the hidden attribute comprises a hidden priority corresponding to each interface element in the application interface, and the interface element in the application interface is hidden based on a hidden priority order of the interface element.

11. The method according to claim 10, wherein the hidden attribute further comprises a hidden element set and/or a maximum quantity of hidden elements, the hidden element set is a set of interface elements that are allowed to be hidden in the application interface, and the maximum quantity of hidden elements is a maximum quantity of interface elements that are allowed to be hidden in the application interface.

12. The method according to any one of claims 1 to 11, wherein the interface attribute of the application interface comprises a scaling attribute, and the scaling attribute is used to determine a size of each interface element in the application interface.

13. The method according to claim 12, wherein the scaling attribute is used to determine a scaling ratio of the size of each interface element in the application interface, and a scaling ratio of a size of any interface element is obtained based on a width of the interface element, and the screen size of the electronic device and/or the size of the application interface.

14. The method according to any one of claims 1 to 13, wherein the interface attribute of the application interface comprises a repetition attribute, and the repetition attribute is used to determine a quantity of repeatedly displayed interface elements in the application interface.

15. The method according to claim 14, wherein the quantity of repeatedly displayed interface elements in the application interface is determined based on the repetition attribute, the size of each interface element in the application interface, and the ratio of the length to the width of the application interface.

16. The method according to any one of claims 1 to 15, wherein before the displaying, by an electronic device, an application interface of a target application, the method further comprises:
obtaining, by the electronic device, the interface attribute of the application interface;
determining, by the electronic device, the size of each interface element in the application interface based on the screen size of the electronic device and/or the size of the application interface, and the interface attribute of the application interface; and
determining, by the electronic device, the layout parameter of the application interface based on the size of each interface element in the application interface and the interface attribute of the application interface.

17. The method according to claim 16, wherein a corresponding attribute priority is set for each interface attribute of the application interface, and the determining, by the electronic device, the size of each interface element in the application interface based on the screen size of the electronic device and/or the size of the application interface, and the interface attribute of the application interface comprises:
determining, by the electronic device, an intermediate value of the size of each interface element in the application interface based on a first attribute, and‴ the screen size of the electronic device and/or the size of the application interface; and
adjusting, by the electronic device, the intermediate value of the size of each interface element in the application interface based on a second attribute, and the screen size of the electronic device and/or the size of the application interface, to obtain the size of each interface element in the application interface, wherein the first attribute and the second attribute are any two interface attributes of the application interface, and an attribute priority of the first attribute is higher than an attribute priority of the second attribute.

18. The method according to claim 16 or 17, wherein the application interface comprises K interface elements, and the determining, by the electronic device, the layout parameter of the application interface based on the size of each interface element in the application interface and the interface attribute of the application interface comprises:
determining, by the electronic device, layout parameters of T interface elements in the K interface elements in a remaining space based on the remaining space of the application interface, and the size of each interface element in the application interface and the interface attribute of the application interface; and
updating, by the electronic device, the remaining space; and if the remaining space is greater than a preset threshold, returning to the step of determining, by the electronic device, layout parameters of T interface elements in the K interface elements in a remaining space based on the remaining space of the application interface.

19. An electronic device, comprising:
one or more processors; and
one or more memories, wherein
the one or more memories store one or more computer programs, and the one or more computer programs comprise instructions; and when the instructions are executed by the one or more processors, the electronic device is enabled to perform the method according to any one of claims 1 to 18.

20. A system, wherein the system comprises a first electronic device and a second electronic device, both the first electronic device and the second electronic device are configured to display application interfaces of a target application, and a screen size of the first electronic device is different from a screen size of the second electronic device;
the first electronic device is configured to display a first application interface of the target application, wherein an interface layout of the first application interface corresponds to the screen size of the first electronic device or a size of the first application interface; and
the second electronic device is configured to display a second application interface of the target application, wherein an interface layout of the second application interface corresponds to the screen size of the second electronic device or a size of the second application interface.

21. A computer-readable storage medium, wherein the computer-readable storage medium comprises a computer program; and when the computer program is run on an electronic device, the electronic device is enabled to perform the method according to any one of claims 1 to 18.
